Europäisches Patentamt

European Patent Office

Office européen des brevets

(19)

(11) Publication number: **0 107 485**
A1

(12) **EUROPEAN PATENT APPLICATION**

(21) Application number: 83306381.1

(22) Date of filing: 20.10.83

(51) Int. Cl.³: **F 16 H  1/32, F 16 H  25/06**

(30) Priority: 22.10.82 GB 8230249
25.04.83 GB 8311182

(43) Date of publication of application: 02.05.84
Bulletin 84/18

(84) Designated Contracting States: AT CH DE FR IT LI NL
SE

(71) Applicant: QUADRANT DRIVE BV, Lomboklaan 31,
NL-3956 DE Leersum (NL)

(72) Inventor: Carden, John Craven, P.O. Box N8159, Nassau
(BS)

(74) Representative: Rennie, Ian Malcolm et al, BOULT,
WADE & TENNANT 27 Furnival Street, London EC4A 1PQ
(GB)

(54) Motion transmitting devices.

(57)  A motion transmitting system of the kind having an eccentric (106 or 204 or 311 or 401 or 451 or 452 or 481 or 501 or 702 or 804 or 854 or 903 or 950 or 951), a wheel (108 or 207 or 302 or 307 or 403 or 455 or 456 or 483 or 484 or 503 or 713 or 820 or 857 or 905 or 958) on said eccentric, a datum member (105 or 201 or 212 or 308 or 409 or 459 or 488 or 510 or 710 or 723 or 801 or 859 or 814 or 913 or 916 or 962) and freely rotatable connector elements between the wheel and the datum member and wherein one of the three members, namely the eccentric, the wheel and the datum member is driven from an input (101 or 202 or 312 or 400 or 450 or 480 or 500 or 701 or 733 or 802 or 851 or 900 or 952) and another one drives an output (116 or 213 or 316 or 465 or 724 or 813 or 865 or 914 or 915), is characterised in that the connector elements are balls (110 or 113 or 119 or 137 or 209 or 303 or 306 or 408 or 458 or 486 or 506 or 711 or 717 or 809 or 861 or 866 or 906 or 911 or 960) engaging in recesses in the wheel (111 or 114 or 208 or 301 or 407 or 457 or 485 or 507 or 709 or 712 or 715 or 808 or 858 or 862 or 909 or 961) and in recesses (112 or 115 or 210 or 211 or 304 or 306 or 410 or 460 or 487 or 509 or 718 or 811 or 859 or 863 or 907 or 912 or 917) in the datum member, one set of recesses being interconnected with a thrust face to permit of balls precessing from one recess to the next.

The recesses may be in adjacent faces of the respective members and in one member or in each member may be formed of resilient elements to urge the balls axially towards the other member.

## MOTION TRANSMITTING DEVICES

This invention relates to motion transmitting devices of the kind comprising eccentric means, wheel means for driving or to be driven by the eccentric means, a datum member and independently movable connector elements engaging profiles in said datum member and engaging also profiles either on the wheel means or on separately movable meshing elements adapted to engage the wheel means and arranged so that gyratory movement of the wheel means relative to the datum member causes the connector means or the meshing elements if separate meshing elements are provided to precess relative to the wheel means.

Motion transmitting devices of this kind are described for example in U.K.Patent Application No.8110092 (Publication No.2072794) in which movable connector elements in the form of rollers engage and roll on profiles on a stator constituting said datum member and on a rotor constituting said wheel means.

In U.K.Patent Application No 8203100 (Publication No.2092106) motion transmitting devices are described of this general nature with connector elements in the form of rollers which roll on profiles in a datum member and also roll on profiles in separate meshing elements which mesh with teeth on the wheel means. Each meshing element or segment would commonly have several teeth for each connector element; such an arrangement enables relatively small pitch teeth to be employed so enabling higher speed ratios to be obtained without reducing the pitch and size of the connector elements.

It is one of the objects of the present invention to provide improved forms of such motion transmitting devices in which the use of rollers as the connecting devices is avoided. In the constructions of the present invention, balls are employed and, as will be explained later, this leads to considerable further advantages and also makes possible new forms of devices which could not be achieved using rollers as heretofore.

According to one aspect of the present invention a motion transmitting device comprises eccentric means carrying wheel means for gyratory motion relative to a datum member, and connector means comprising a plurality of balls, each ball being in rolling orbital engagement with a recess in said datum member and in rolling orbital engagement with a recess in said wheel means, being in captive dependency in one of these recesses and being movable into and out of rolling driving engagement with the other, the number of recesses on the datum member and the wheel means differing so that the balls precess relative to said recesses in which they are not captive as the wheel means gyrates and rotates relative to said datum member.

Typically the eccentric is driven by an input shaft and the output shaft is taken from the wheel means, conveniently on a planocentric coupling. As is well known however in devices of this kind which are reversible, any one of the three members namely the eccentric, the wheel means and the datum member may be used as the input and any other one may be used as the output. The third is usually a stator typically forming part of or being secured to a housing. The third member however may in some cases form a second output or input.

With this construction, assuming the eccentric is driven by an input shaft and the output is taken from the wheel means, the speed reduction between the input and the output is obtained in that, for each revolution of the input shaft gyrating the wheel means, the wheel means is moved on one step around the first profiles or one tooth

-4-

of separate toothed meshing elements provided, assuming a difference of unity.

In the construction described, the balls form an axial ball thrust bearing as well as constituting the connector elements of the motion transmitting device. Because of this, it becomes possible to reduce the number of conventional bearings used in the device. It also becomes easier to manufacture the various component parts out of pressings, mouldings, die castings or other components readily made using mass production techniques.

In one form of construction, the datum member comprises a plate having a face adjacent a face of the wheel means and wherein said recesses are in adjacent facing surfaces of said plate and said wheel means, one set of recesses being closed profiles to retain the balls in captive dependency and the other set of recesses being formed with circumferential thrust face which provides a path to allow the precession of balls from one recess to the next as the wheel means gyrate with respect to the datum member. The thrust face may be a wall of an interconnecting channel between the recesses. In this arrangement, conveniently said datumn member is rotatable and is connected to a rotatable output which is coaxial with an input driving said eccentric means, and said wheel means has a second face with first coupling

0107485

-5-

recesses adjacent a face of a stator element having second coupling recesses and second balls are in captive dependency in said first and second coupling recesses, each of said second balls being partly in a first and partly in a second coupling recess, said coupling recesses being shaped so that the balls gyrate in the coupling recesses causing said wheel means to gyrate but not rotate and causing said rotatable datum member to rotate and to drive said output at a reduced speed compared with the speed of the input.   The use of two sets of balls in this way facilitates the use of the balls as an axial thrust bearing.   The aforesaid output may conveniently have an axially adjustable axial thrust bearing for axially loading said first and second balls whereby the balls function also as a ball thrust bearing.

In another construction, said eccentric is on a rotatable input and said datum means is arranged as a stator and the wheel means is a capturing member with closed profiles having said balls in captive dependency in said closed profiles, said balls first engaging a first arc of first open recess profiles on said stator, said first open recess profiles having mouths facing axially and facing also radially inwardly, whereby said wheel means, balls and first open recess profiles form a first stage speed change, said balls furthermore engaging a second arc of second open recess profiles on a rotatable output member coaxial with the input, said output member having a face adjacent a facing surface of the wheel means, said second open recess profiles having mouths facing axially and facing also radially outwardly, to form a second stage speed change whereby the resultant speed change from input to output depends on the fractional speed changes of the first and second stages. In this arrangement, the bearings for said input and said output and on the eccentric may be axial thrust bearings; the axial thrust bearings for the input and output may be made axially adjustable for axially loading said balls whereby the balls act as thrust bearings.

The invention also includes within its scope a motion transmitting device comprising an input carrying eccentric means, wheel means carried on said eccentric means for gyratory motion relative to a datum member, and connector means comprising a plurality of balls in respective apertures extending through said wheel means parallel to the axis thereof, each ball being in rolling engagement with a closed profile of the aperture, the balls protruding out of the aperture on both faces of said wheel means and each ball being in captive dependency in its aperture, said balls being movable with said gyratory motion into and out of rolling driving engagement with first open recesses disposed on a face of said datum member adjacent said wheel means, the mouths of said first open recesses facing axially and facing radially inwardly, the number of said first recesses on said datum member and closed profiles on said wheel means differing so that the balls precess relative to said first open recesses, engaging said recesses along a first arc as the wheel means gyrates and rotates relative to said datum member thereby forming a first stage speed change, said balls further being movable into and out of rolling driving engagement with second open recesses on a face of an output member adjacent said wheel means, which second open recesses have mouths facing axially and facing radially outwardly, said output member being mounted for rotation coaxially with said input, the number of second open recesses on said output differing from the number of said closed profiles on said wheel means so that the balls precess relative to said second recesses in the opposite direction to the first stage but not relative to said output member as the wheel means rotates and gyrates relative to said output member, the balls, wheel means and output member thereby forming a second stage speed change and the overall speed change from the input to the output depends on the fractions representing the speed ratios of the separate first and second stages. In this construction, an axial thrust bearing on said output may be made axially adjustable for axially loading said balls thereby causing them to act as balls in a ball thrust bearing.

In the above-described motion transmitting devices, the use of balls as the meshing elements has considerable advantages but although backlash may be small, some of the devices described do still inevitably have some backlash. It is possible to reduce backlash still further and, in some cases, virtually eliminate it.

In one construction within the scope of the invention, a motion transmitting device comprises eccentric means carrying wheel means for gyratory motion relative to a datum member, and connector means comprising a plurality of balls, each ball being in rolling engagement with a recess in said datum member and a recess in said wheel means, being in captive dependency in one of these recesses and being movable into and out of rolling driving engagement with the other, and one of the recesses being independently resiliently urged axially towards the other, the number of recesses on said datum member and the wheel means differing so that the balls precess relative to said recesses in which they are not captive as the wheel means gyrates and rotates relative to said datum member.

By "resiliently urged" it is meant that the member carrying the recess may move away from the other recess but springs back to its initial position.

A typical use of such a motion transmitting device is as a reduction drive used in conjunction with electric stepper motors for control of fuel metering, fuel air ratios and ignition control systems in internal combustion engines. Such control systems are increasingly being used under the control of a microprocessor system programmed to achieve maximum fuel economy under all operating conditions.

The advantages of incorporating a reduction drive with the stepper motor are twofold. First, stepper motors have poor torque ratings per unit size and the reduction drive multiplies the available torque. Secondly, the reduction drive also effectively multiplies the number of steps of the motor relative to the output shaft of the reduction drive. One typical

-10-

example is a stepper motor whose diameter is only 30mm with a torque rating of 20 inch ounces. The maximum speed of rotation is 300 rpm but with each step of the motor being only 0.15°. A 30 to 1 speed reduction drive coupled to this motor will thus make each step of the motor 30 times finer.

Clearly, there is little point in having such fine steps if the backlash of the reduction drive is a significant proportion of one step of the motor. Hence, backlash of the order of 1 minute of arc or less is desirable for this sort of application. It is the facility to provide devices with backlash of this very low order which the present invention seeks to provide.

Preferably one of the three members namely the eccentric, the wheel means and the datum member is driven from an input and any other one of the three members drives an output. The third of the three members is preferably a stator.

The datum member may comprise plate means having a face adjacent the face of the wheel means and wherein said recesses are in adjacent facing surfaces of said plate and said wheel means, one set of recesses being closed profiles to retain the balls in captive dependency and the other set of recesses being formed with an interconnecting channel for precession of balls from one recess to the next as the wheel means gyrate with respect to the datum member. The plate means preferably comprises a plurality of axially resilient peripheral segments, one recess being formed in each of said peripheral segments and the said recesses preferably being the closed profile recesses. The plate means may be a spring steel plate having radial slots separating the peripheral segments.

The other sets of recesses are preferably each tapered in an axial direction from their open sides. It will be appreciated that trapping the balls between a resilient recess and a tapered recess has the effect of reducing the backlash practically to zero because the resilient loading takes up axial movement of the balls while the tapering of the other mating recess restricts radial movement.

The invention also provides, in a motion transmitting device comprising eccentric means carrying wheel means for gyratory motion relative to a datum member, and connector means comprising a plurality of balls, each ball being in rolling engagement with a recess in said datum member and a recess in said wheel means, being in captive dependency in one of these recesses and being movable into

-12-

and out of rolling driving engagement with the other, the number of recesses on said datum member and the wheel means differing so that the balls precess relative to said recesses in which they are not captive as the wheel means gyrates and rotates relative to said datum member, an arrangement in which one set of each of said pairs of recesses or profiles between which balls are located are independently resiliently urged towards the other set of recesses or profiles. The said one set of recesses may be formed in a plate means comprising a plurality of resilient peripheral segments, one said recess being formed in each peripheral segment. The plate means may comprise a spring steel plate having radial slots separating radially the peripheral segments.

In each case, the other of said sets of recesses or profiles may each be tapered in an axial direction so that each of the balls is trapped between a resiliently urged recess and a tapered recess or profile in the same way as is described above.

In the following description reference will be made to the accompanying drawings in which:-

Figure 1 is a sectional elevation of a motion transmitting device constituting one embodiment of the invention;

Figures 2 and 3 are side elevations of part of a wheel and a datum plate respectively used in the device of Figure 1;

Figures 4 and 5 are views similar to Figure 1 of further embodiments of the invention;

Figures 6, 7 and 8 are partial sectional elevations of further embodiments of motion transmitting device within the scope of the invention;

Figure 9 is a part sectional elevation showing a modification of the construction of Figure 1 making use of multitooth segments engaging in a wheel;

Figure 10 is a side elevation illustrating some multitooth segments and part of a wheel in the construction of Figure 9;

Figure 11 is a view of a capturing plate of a motion transmitting device as described with reference to Figures 1 to 5;

Figure 12 is a view of a sprocket or gear wheel of the same motion transmitting device;

Figure 13 is a view similar to Figure 11 of a capturing plate forming part of a motion transmitting device forming a further embodiment of the invention;

Figure 14 is a view of a stator plate of a motion transmitting device used in the embodiment of Figure 13;

Figure 15 is a schematic sectional view through a sprocket or gearwheel of a motion transmitting device;

Figure 16 is a sectional elevation of a motion transmitting device constituting another embodiment of the present invention and including the capturing plate, stator plate, and gearwheel of Figures 13, 14 and 15;

Figure 17 is a view similar to Figure 16 of a second embodiment of motion transmitting device according to the invention; and

Figures 18, 19 and 20 illustrate further embodiments of the invention.

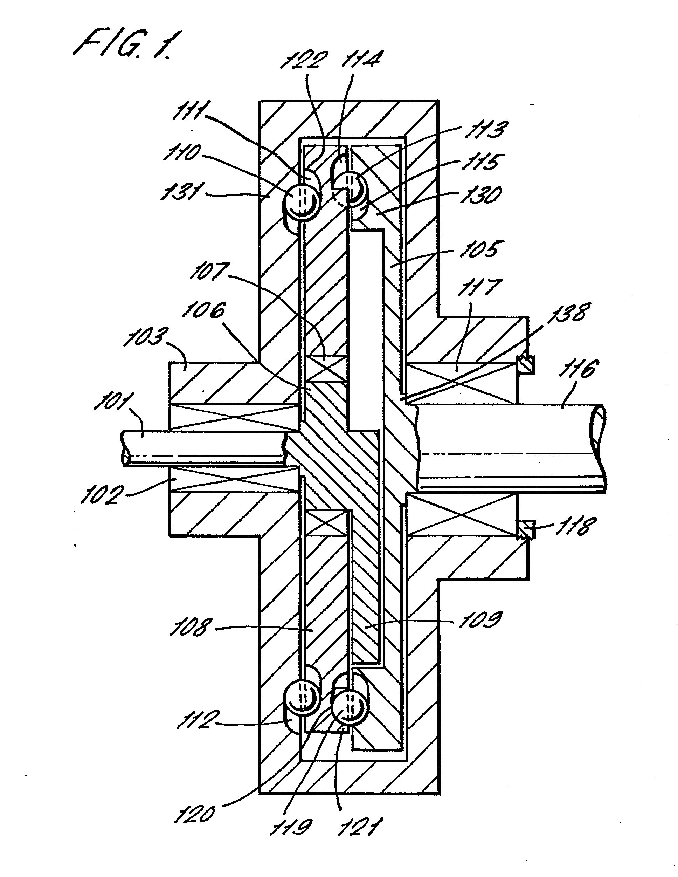

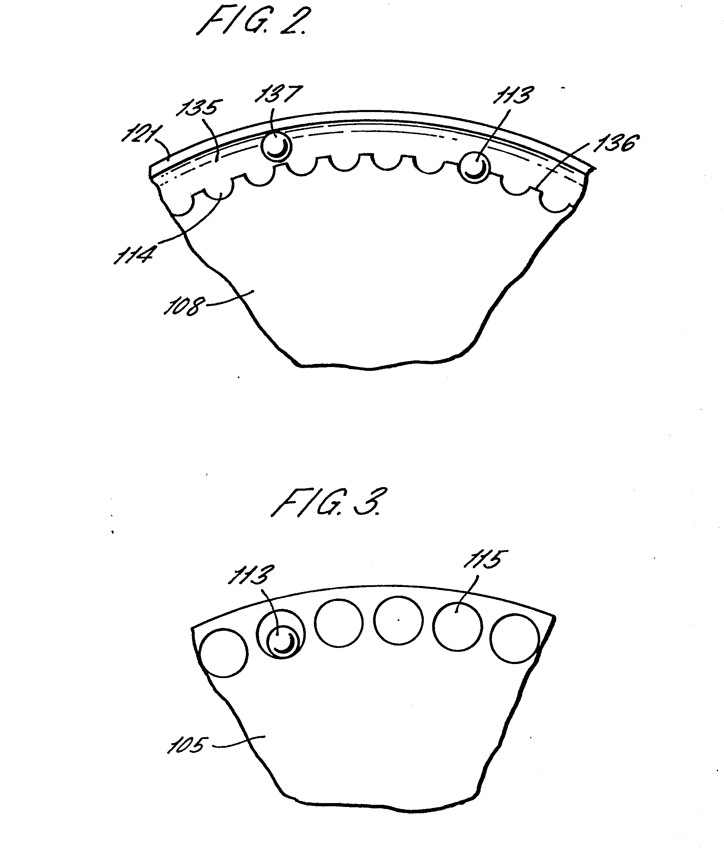

Referring to Figures 1 and 2, there is shown a motion transmitting device for transmitting rotary motion from an input shaft 101 to an output shaft 116 with a speed reduction but giving homokinetic transmission. The input shaft 101 is mounted in a single bearing 102 in a housing 103. A capturing plate 105 is attached to or integral with the aforementioned output shaft 116. Carried on the shaft 101 or integral therewith is an eccentric 106 carrying an eccentric bearing 107. A gear wheel 108 runs freely on this eccentric bearing but, as will be explained later, this wheel is caused to gyrate and not rotate. A counterbalance 109 is fixed on the shaft 101 to counterbalance the eccentric mass of wheel 108 and its support.

The aforementioned capturing plate 105 extends radially outwardly from the output shaft 116 to rotate therewith, this shaft and the input shaft 101 being coaxial. The radially outward portion of plate 105 has a thickened portion 130 which lies adjacent the peripheral portion of the wheel 108. The housing 103 has a first radially extending portion 131 lying adjacent the wheel 108.

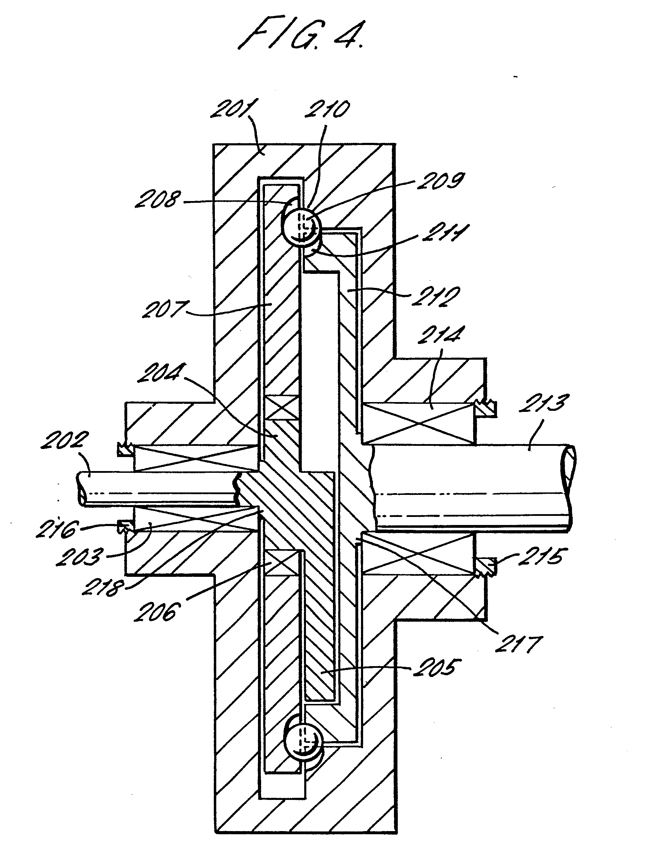

A plurality of balls 110 roll in a double planocentric coupling formed by first part-spherical coupling recesses 111 in the face of the gear wheel 108 and second part-spherical coupling recesses 112 in the inwardly facing surface of the housing portion 131. These balls and recesses allow the wheel 108 to gyrate but prevent any rotation relative to the housing. A second set of balls 113 lie in concave recessed profiles 114 on the opposite face of the wheel 108 and concave recessed capturing profiles 115 on the face of the thickened portion of the capturing plate 105 which is immediately adjacent the wheel. Figure 2 shows a portion of the wheel 108 with the recesses 114. As is most clearly seen in Figure 2, these concave recessed profiles 114 form in effect a series of teeth around the wheel, the wheel having an outer lip 121 extending continuously around its periphery with a channel 135 providing a thrust face between the lip 121 and the tops 136 of the teeth. This channel is of sufficient size to allow the balls 110 (as shown by ball 137 in Figure 2) to move freely in the peripheral direction between the lip and the teeth. The lip, on its radially inward face, is radiused to conform with the ball radius, this lip thus merging into the base of the channel. Between the teeth, the channel merges into the radiused recesses forming the profiles between adjacent teeth. The lip and channel thus prevents axial movement of the balls. The balls, considered in the axial direction of the assembly, as shown in Figure 1, extend for approximately half their diameter into the channels or recesses. The other hemispherical half of each of the balls sits in the appropriate recessed capturing profile 115 on the capturing plate. There is a separate profile 115 for each ball as shown in Figure 3 which is a side elevation, looking at the face adjacent the wheel, of part of a capturing plate. Thus the capturing plate is carried around as the balls precess.

The number of teeth formed by the recesses 114 differs from the number of recesses 115. The difference is usually one but, in some cases, a difference of more than one may be employed. This difference in the numbers of the two sets of recesses causes the balls to precess as the wheel rotates, moving the balls into and out of engagement with the teeth formed by the radially inward portions of the recesses 114. The capturing plate is thus made to rotate with a speed which is $\frac{1}{n}$ of the input speed where $\underline{n}$ is the number of the recesses 115.

The capturing plate 105 is fixedly attached to output shaft 116 and is mounted in a tapered roller bearing 117 in the housing 103. An axially adjustable nut 118 is threaded into the housing 103 for adjusting the axial loading on the gyrating but non-rotating wheel 108 and the capturing plate 105, through thrust shoulder 138. The wheel and the capturing plate can thus have a predetermined axial load imposed from their two opposite sides thus preventing them from tilting in any way. It will be noted that, with this construction in which the balls can take axial loads, the loads on the bearings for the input and output shafts and wheel are reduced and the number of such bearings is reduced compared with devices using roller bearings and in this example only three bearings are used. The construction is thus particularly suited to low-power high-speed devices. The drive is reversible; thus the input and output can be interchanged to give a step-up instead of a step-down speed ratio.

It will be noted that, as the balls 113 disengage from the first concave recessed profiles 114, as shown by ball 119 in Figure 1, they are held axially against a thrust face 120 (i.e. in the channel 135 in Figure 2) of the wheel 108 and axially and radially against the radiused lip 121 of the wheel 108. The first concave recessed profiles 114 reach their radially outward extremity at 122. The lip 121 forms the aforementioned channel 135 which constitutes a form of ball race to take axial thrust on the balls during the part of the cycle where they are disengaged from the teeth,  No such channel is required in the capturing plate 105 since the balls 113 are always each in captive dependency in a respective one of the concave recessed profiles 115.

In the construction of Figures 1, 2 and 3, substantially pure rolling motion of all the torque transmitting elements can be obtained.  The balls roll in the profiles which may have shapes determined in the known way and as explained in the aforementioned applications.  The mathematically correct shape of the profiles to obtain pure rolling motion is ovoidal and the formulae for this are given in Application No.8110092 (Publication No.2072794).  As explained in Application No.8203100 (Publication No.2092106), it is possible to depart from this and have circular profiles.  The balls in this construction act as a ball thrust bearing so preventing tilting of the rotating and/or gyrating elements.  These balls can be quite small leading to economy in manufacture and miniaturisation of speed reducers.

Because of the ability to apply an axial preload, a degree of control for taking up backlash is also achieved with the above-described construction.

The construction of Figures 1, 2 and 3 achieves the advantages described in the aforementioned applications for constructions using roller pins. However, the use of balls instead of pins makes possible further constructions which could not be achieved or which could only be achieved with great difficulty using roller pins.

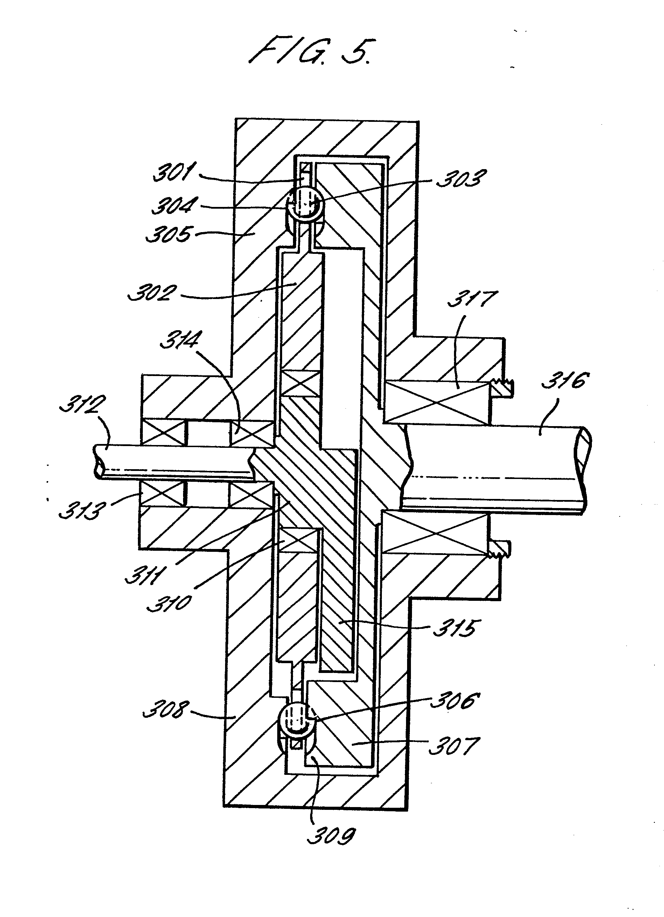

Figure 4 illustrates a novel configuration of a two-stage motion transmitting device which is very nearly co-planar and, by the use of balls as the independently movable meshing connector elements, achieves an unexpected and beneficial result. It becomes possible, by the use of balls, to use one set of independently movable meshing connector elements for both stages of the device and also, at the same time, to have the balls perform the function of an axial thrust bearing as described earlier in this specification. Thus the balls in this configuration perform three separate and distinct functions which could not be readily achieved by any other means and results in still further reduction of manufacturing cost.

In rotary motion transmitting devices, with two stages in series in a differential configuration, the fractions expressing the speed ratios of each stage are inherently combined to obtain the final ratio. In the device of Figure 4, the ratios are, to a first approximation, added.

In Figure 4, a housing 201 rotatably carries an input shaft 202 in a tapered roller input bearing 203. Fixedly attached to the input shaft 202 are an eccentric 204 and a counterbalance 205. Eccentric 204 carries eccentric thrust bearing 206 on which is freely rotatable a gyrating and rotating capturing plate 207. On one face of this plate 207 are a first set of concave recessed profiles 208 in which balls 209 are located in captive dependency, i.e. there is one ball in each recess with each ball always remaining in the same recess. These balls 209 engage with second concave recessed profiles 210 on an inwardly facing surface of the housing 201 and also with third concave recessed profiles 211 on a face of an output wheel 212. These profiles 211 form, in effect, teeth on the output wheel which is fixedly attached to an output shaft 213. This output shaft is mounted in a tapered roller bearing 214 in the housing 201. The axial position of this bearing 214 in the housing can be adjusted by an axial adjustment nut 215 threaded into the housing 201 which imposes thrust through shoulder 217 onto output wheel 212 and so onto balls 209.   Similarly, the axial position of bearing 203 is adjustable by nut 216 which imposes thrust through shoulder 218 and through coupling plate 207 onto balls 209.

Let us assume that there are 30 second concave recessed profiles 210 evenly spaced around the surface of the housing and that, in capturing plate 207, there are 29 concave recessed capturing profiles 208, which profiles 208 hold 29 balls in captive dependency. In output gear wheel 212, there are 28 first concave recessed profiles 211.   This construction results in one set of connector elements, namely the balls 209, being used twice to form a two-stage device.   This construction eliminates the need for a back-to-centre coupling and this results in a very economic construction. In the example given, the drive ratio will be

$$\frac{29 \times 30 - 28 \times 30}{29 \times 28} = \frac{1}{14}$$

It will be noted that the device of Figure 4 uses a common capturing plate for the two stages.   This is not possible with the prior types of construction described in the aforementioned applications using roller pins as connecting elements.   By using balls, which inherently cannot cant or tilt and which therefore need only be supported at one point in each element of the device, it becomes possible to use the balls as connecting elements which, in the engaged portion of the first stage, engage the housing 201 and the gyrating and rotating capturing plate 207 but which, in the part of the cycle of the first stage where they are disengaged from the housing, can be used to engage the output wheel as well as the capturing plate. The profiles of the recesses 208 on the capturing plate are shaped to give the desired pure rolling motion with the radially outward portions of these profiles being effective for the second stage, where the balls 209 engage the recesses 211 in the output wheel 212 as shown in the bottom half of Figure 4 whilst the radially inward portions of the recesses 208 are effective for the first stage, by engaging the recesses 210 through the balls 209. The balls 209 precess, as the input shaft is rotated so gradually rolling around the various profiles.

It is convenient to have unity difference in between the number of balls and the number of recesses 210 in the housing and also between the number of balls and the number of recesses 211 in the output wheel but differences greater than unity could be employed. The device of Figure 4, like the device of Figures 1, 2 and 3, is reversible so that the shaft 213 could be used as the input shaft to drive shaft 202 if a step-up speed ratio is required.

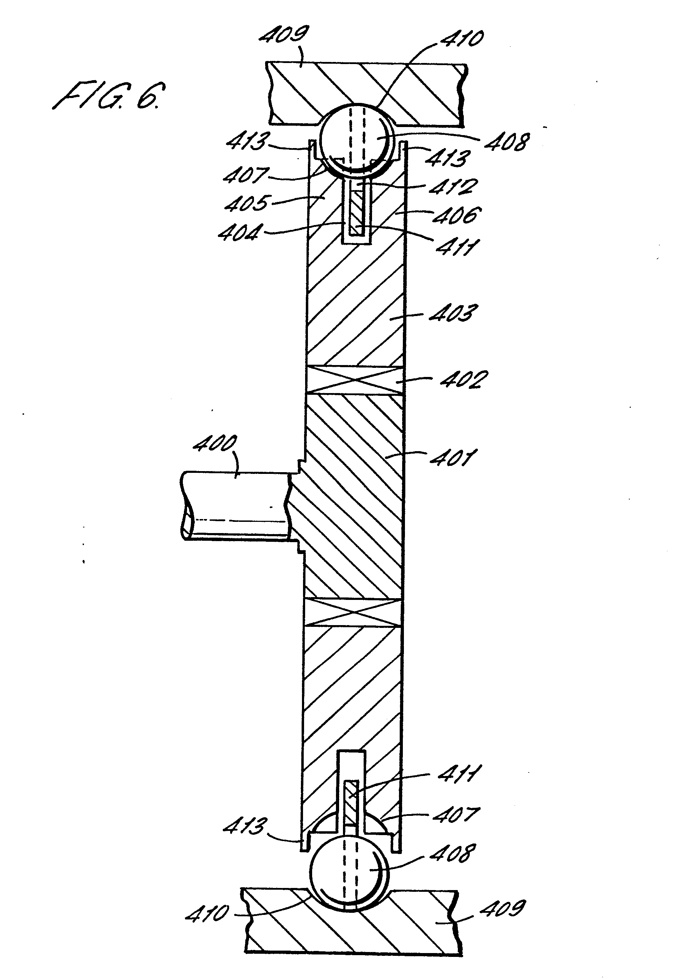

Figure 5 illustrates another two-stage arrangement in which one set of balls is employed for both stages. In the construction of Figure 5, a set of capturing profiles 301 are formed as apertures extending through a gyrating and rotating capturing plate 302 with balls 303 captured in these holes which are evenly spaced around the peripheral portion of the capturing plate. The capturing plate 302 is freely rotatable on an eccentric bearing 310 on an eccentric 311 carried by an input shaft 312.   This input shaft, which is supported in bearings 313, 314 in a housing 305, also carries a counterbalance 315.   An output shaft 316, coaxial with the input, is supported in a tapered roller bearing 317 in the housing 305 and carries an output wheel 307.

The balls 303 have a diameter greater than the axial thickness of the part of the capturing plate 302 in which they are held and thus protrude beyond both faces of the apertures constituting capturing profiles 301. These balls engage a second set of profiles in the form of second concave recesses 304 in a face of the housing 305, which face lies closely adjacent one face of the peripheral portion of the capturing plate 302.   The other face of this peripheral portion of the capturing plate lies adjacent a face of the output wheel 307 in which are first concave recesses 306.

As in the arrangement of Figure 4, the number of recesses 304 in the housing differs from and is

-25-

typically one more than the number of the apertures 301 in the capturing plate. Likewise the number of recesses 306 in the output wheel 307 differs from both these numbers and is typically one less than the number of apertures 301. The concave recesses 304 in the housing are effective in their radially outward portions to engage the balls whilst their radially inward portions are joined to form a continuous channel having a radiused lip 308 on its radially inward periphery against which the balls can bear. Thus these recesses are equivalent to inwardly directed teeth on a female element but serve to restrain the balls axially and radially inwardly when the balls are disengaged from the teeth constituted by the radially outward parts of the individual recesses 304. The first set of profiles 306 have radially inward portions which engage the balls 303, constituting in effect outwardly directed teeth of a male gear; the radially outward portions of the profiles 306 are joined to form a channel in which the balls can precess, the outer periphery of this channel being defined by a circumferential radiused lip 309. These profiles 306 are thus similar to the construction shown in Figure 2.

In the construction of Figure 5, the balls, in the engaged part of the cycle for the first stage, are held radially outwardly by the capturing plate. During this part of the cycle therefore these balls roll on the radially inward portions of the capturing profiles 301 and engage and roll on the outer part of the profiles 304. Those balls which, at this time, are not engaged for the first stage, lie radially inwardly beyond the teeth portions of profiles 304. These balls are thus available, in this construction, for use in the second stage. For this stage, the balls roll on the radially outward portions of profiles 301 and engage the teeth portions of profiles 306.

The shapes of the inward and outward portions of the profiles 301 are chosen to provide substantially pure rolling motion between the balls and the profiles during the appropriate portions of the cycle. Thus each of these portions of the profile may be a part ovoid having a shape explained in the aforementioned applications. As previously indicated, if the eccentricity is small, circular profiles may be suitable. The shapes of the radial outward portions of profiles 304 and the radial inward portions of the profiles 306 are similarly chosen to give the desired pure rolling motion.

The construction of Figure 5 forms a motion transmitting device in which rotary motion is transmitted with the speed ratios of the two stages combined as in the case of Figure 4. Also, in the construction of Figure 5, the balls provide axial support between the members and thereby act as axial thrust bearings.

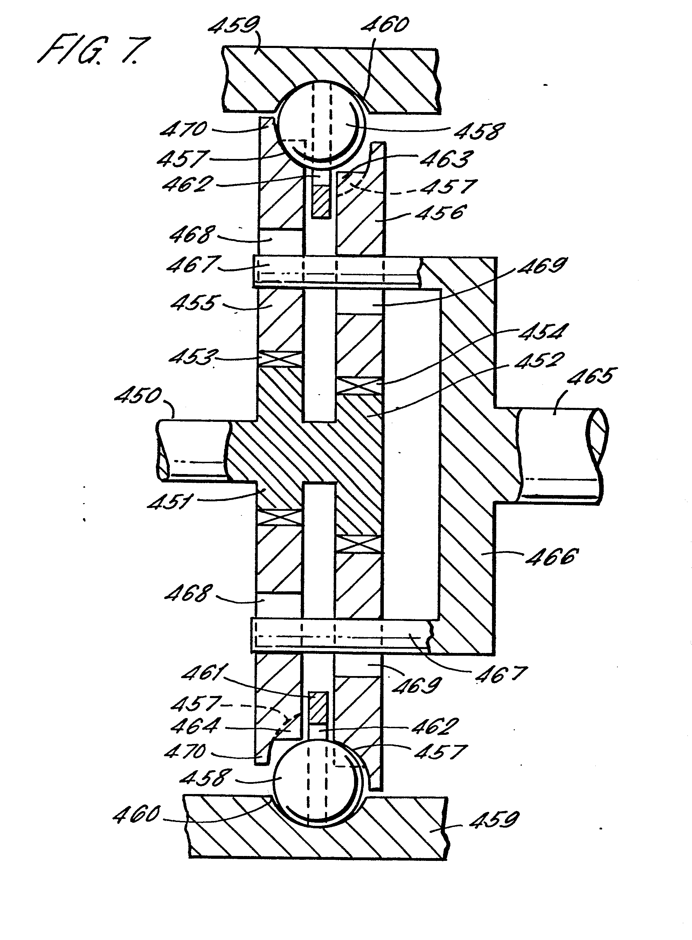

Figure 6 illustrates part of a modification of the devices previously described making use of a stator, that is to say a capturing plate, which extends cylindrically around the balls and gyrating wheel. Referring to Figure 6, there is shown an input shaft 400 driving an eccentric 401 carrying an eccentric bearing 402. Freely rotatable on this bearing is a wheel 403 which may be referred to as a gear wheel for reasons which will be apparent later. The outer peripheral portion of this wheel has a radial groove 404 thereby dividing the peripheral part of the wheel into two portions 405, 406 each of which has shaped profiles 407 in the form of a series of recesses evenly spaced around the axially inwardly facing surfaces of the portions 405, 406 and shaped to receive, in rolling engagement, balls 408. Radial outward movement of the ball is limited by a cylindrical capturing plate 409 having a plurality of recesses 410 evenly spaced around the inner surface of the capturing plate 409 and shaped to receive, in rolling engagement, the respective balls 408. The balls are held in captive engagement with the recesses 410 by a containment ring 411 lying in the aforementioned slot 404 and extending circumferentially around the wheel axis, this containment ring being uniformly spaced from the inner surface of the capturing plate 409 by a plurality of spacers 412 lying between the balls 408. As is seen in the lower part of Figure 6 where the wheel 403 is in a position where it is held by the eccentric 401 away from the surface of the capturing plate, the ring 411 limits radial inward travel of the balls. Flanges 413 on the wheel limit axial movement of the balls. There is thus one ball associated with each of the recesses 410 in the capturing plate. The recesses 407 in the outer periphery of the wheel 403 form, in effect, a series of teeth and the number of these teeth differs from the number of balls, the difference conveniently being unity. It will be immediately apparent that, as the input shaft 400 is rotated, the eccentric 401 causes the wheel 403 to gyrate. Where the ball is in contact with recesses 410 and 407, driving engagement is achieved. The balls roll on the surfaces of the recesses which, viewed in end elevation, have profiles shaped to achieve rolling engagement. As explained in the aforementioned applications, these profiles may be ovoidal but they may depart from the theoretical ideal and, particularly where the eccentricity is small, they may become circular. Where the gyration of the wheel 403 separates the wheel from the inner surface of the stator (as is seen in the lower part of Figure 6)., the balls are held between the stator recesses 410 and the retaining ring 411 and so are held out of engagement with the profiles 407 on the wheel. Thus the balls can precess relative to the wheel as the wheel is gyrated. If there are $\underline{n}$ recesses 407 in a wheel, then the wheel will have a rotation at $\frac{1}{n}$ of the speed of the input shaft. An output shaft may be coupled to the wheel by a planocentric coupling of conventional form to provide an output coaxial with the input.

It will be noted that the construction of Figure 6, like the other constructions described above, makes use of balls which inherently act as axial thrust bearings.

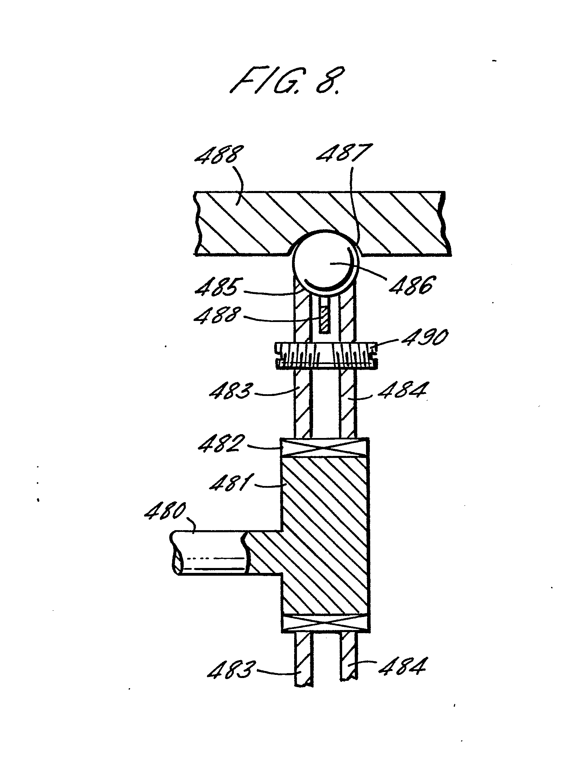

Figure 7 illustrates a modification of the construction of Figure 6 having two wheels which are gyrated in opposite phase. In Figure 7 an input shaft 450 drives two eccentrics 451,452 fixed on the shaft 450 but 180° out of phase. These eccentrics 451, 452 carry respectively eccentric bearings 453, 454 which in turn support freely rotatable wheels 455, 456. The radially outer portions of these two wheels 455, 456 are generally similar to the outer portions 405, 406 of the wheel in Figure 6 although the two wheels 455, 456 will gyrate 180° out of phase. These outer portions have a plurality of recesses 457 spaced evenly around the peripheral portions. The recesses are shaped to engage, in rolling engagement, balls 458 which are retained in a cylindrical capturing plate 459 extending around the wheels. The capturing plate has a plurality of recesses 460 equal in number to the number of balls. A retaining ring 461 extends around the axis of the input shaft between the two wheels and is held by supports 462 between the ball locations so as to be uniformly spaced from the inner cylindrical surface of plate 459. The number of teeth formed by the recesses 457 differs from the number of balls and commonly this difference will be unity. Because the teeth on the two wheels are 180° out of phase, in the sectional view shown in Figure 7, in the upper part of the drawing, the section is through a recess 457 in wheel 455 but is through the upstanding toothed portion 463 between recesses for the wheel 456. In the lower part of the drawing, a profile 457 on wheel 456 is shown engaging the ball whereas, for the wheel 455, which is held upwardly by the eccentric 451 to be out of engagement with the ball, the section is through a tooth 464.

In the construction shown in Figure 7, the wheels 455 and 456, beyond the teeth, have continuous flange portions 470 extending radially outwardly to ensure retention of the balls. Such flanges thus form a continuous channel in which the balls can precess over the outermost portions of the teeth.

The operation of each of the wheels 455 and 456 is similar to the operation of the device shown in Figure 6 but the two wheels gyrate 180° out of phase. The various recesses are shaped in the manner previously described to achieve the required rolling engagement between the balls and the capturing plate and between the balls and the wheels.

In the construction shown in Figure 7, a planocentric coupling from the wheels to an output shaft 465 is illustrated. For this purpose the output shaft 465 has secured thereto a member 466 carrying two or more pins 467 which pins extend parallel to the common axis of the input and output shafts, these pins engaging in apertures 468 in the wheel 455 and in apertures 469 in the wheel 456, the apertures being of such size that the pins, relative to the apertures, roll around the internal surfaces of the apertures as the wheels gyrate.

0107485

-32-

The input shaft 450 and the output shaft 465 may be carried in the known way in bearings in a housing, which housing may be integral with or rigidly secured to the aforementioned capturing plate 459.

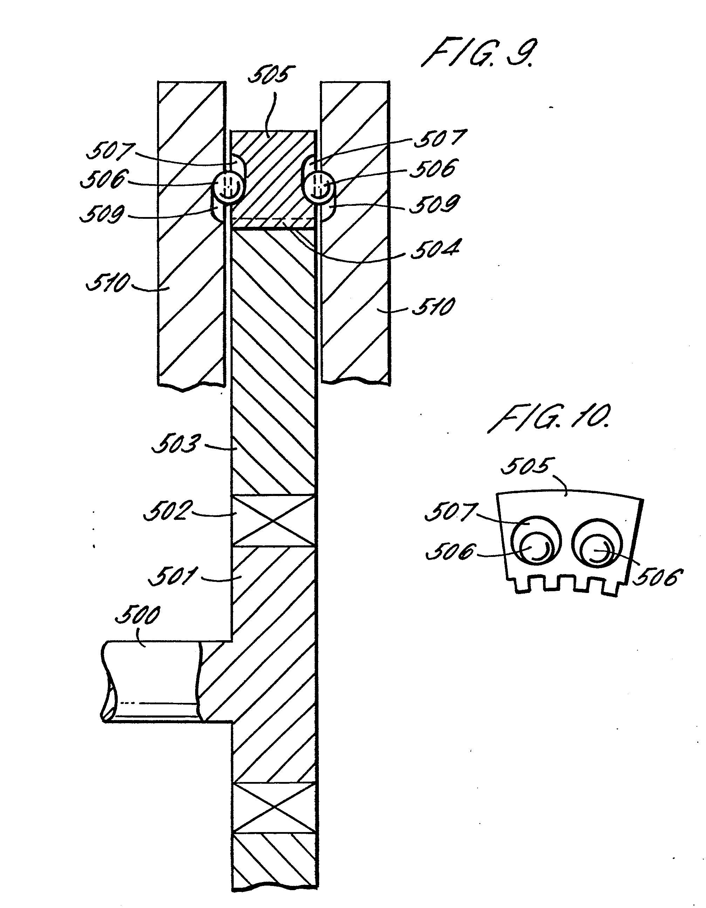

Figure 8 illustrates another modification of the construction of Figure 6.  In Figure 8, which shows part of a motion transmitting device, an input shaft 480 carries an eccentric 481 supporting an eccentric bearing 482 on which, in this embodiment, there are freely rotatable two separate wheels 483, 484.  These wheels have profiles 485 at their outer ends corresponding to the profiles 407 on the outer portions 405, 406 of Figure 6.  In the construction of Figure 8, the two wheels 483, 484 are gyrated in phase with one another and thus the profiles on the two wheels are moved into and out of engagement simultaneously with balls, one of which is shown at 486.  The balls are retained in profiles 487 in a capturing plate 488 which extends around the wheels.  A retaining ring 489 is provided between the two wheels 483, 484 to limit the radial inward movement of the balls 486 with respect to the capturing plate 488, as in the previously described embodiments.

The arrangement thus far described with respect to Figure 8 operates in the same manner as has already been described with reference to Figure 6.  In Figure 8

-33-

however provision is made for adjusting the axial spacing of the two wheels 483, 484. This is achieved by means of a plurality of adjusting screws 490, each having a left-hand and right-hand thread with the threads engaging respectively the two wheels. The screws extend parallel to the axis of the wheels and are disposed around the axis so as to hold the two wheels with an adjustable axial spacing. By means of these screws 490, the axial spacing of the wheels 483, 484 can be adjusted thereby enabling any backlash between the profiles 485 and the balls 486 to be taken up and thereby also backlash between the balls 486 and the recesses 487 when in driving engagement. These screws 490 thus provide a means for reducing backlash in the coupling.

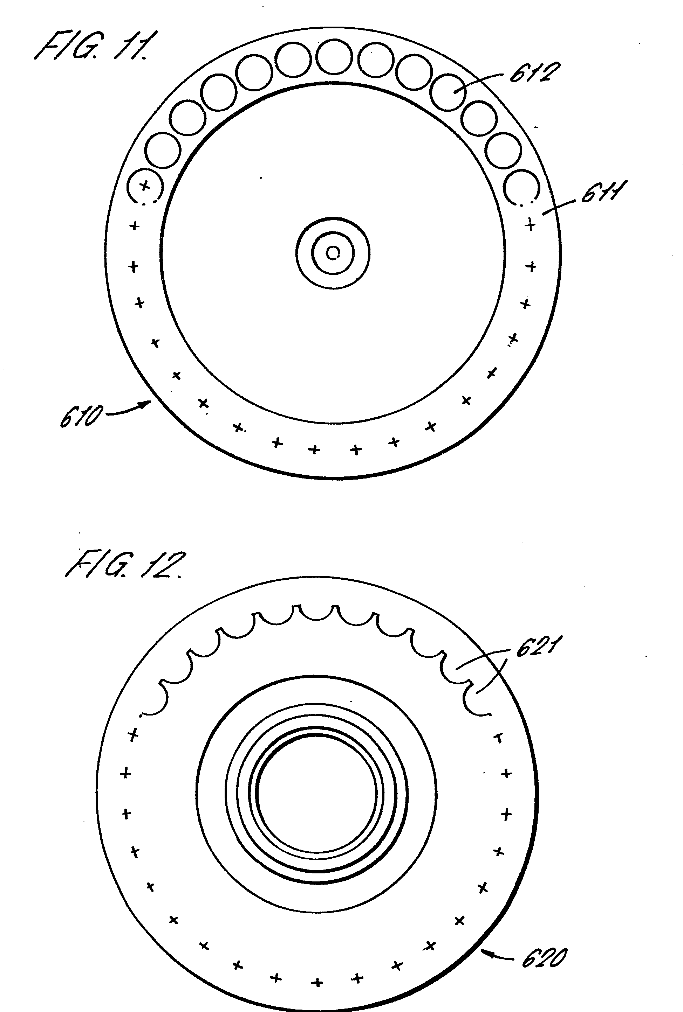

Figure 9 illustrates a modification of the construction of Figures 1 to 3 in which the ball, instead of constituting directly the connecting elements between the capturing plate and the wheel means, are arranged to act as connecting elements between the capturing plate and separate meshing elements, which meshing elements in turn engage with teeth on the wheel means. Reference may be made to U.K. Patent Application No.8203100 (Publication No.2092106) which describes the use of separate meshing elements and connector elements in constructions in which the connector elements are roller pins.    The use of such separate meshing elements enables the size and form of the teeth of the wheel and meshing elements which mutually engage to be determined irrespective of consideration of the connector elements and the profiles determining relative movement of the connector elements with respect to the meshing elements. Particularly it permits the use of meshing elements each having a plurality of teeth and hence of wheels having effectively many more teeth than is possible if the connector elements directly have to engage teeth on the wheel.    For example each meshing element might have four teeth.    The total number of teeth on all the meshing elements may differ by unity from the number of teeth on the wheel.    In general with a male wheel and female meshing elements, the number of teeth on the meshing elements would be one more than the number of teeth on the wheel.    In such a construction, the meshing elements would precess by one tooth in each cycle. This enables much higher reduction ratios to be obtained than if the connector elements mesh directly with the effective teeth on the wheel as the teeth spacing then would be determined by size of the connector elements and their associated profiles.

Referring to Figure 9 there is illustrated a

0107485

-35-

construction having an input shaft 500 fixedly carrying an eccentric 501 supporting an eccentric bearing 502 on which is freely rotatable a gear wheel 503. This wheel is thus gyrated in a similar manner to the previously described embodiments. The wheel has a plurality of teeth evenly spaced around its periphery as shown at 504, these teeth engaging meshing teeth on a meshing element 505. The teeth in the meshing element and wheel are not in rolling engagement but are shaped so that, as the meshing elements move into engagement with the teeth, they lock therewith and remain rigid with the wheel over the driving portion of the cycle. Preferably, as described in the aforementioned published Specification No.2092106, the meshing elements are shaped so that, when in driving engagement, they abut one another to form a rigid arch extending around part of the periphery of the wheel.

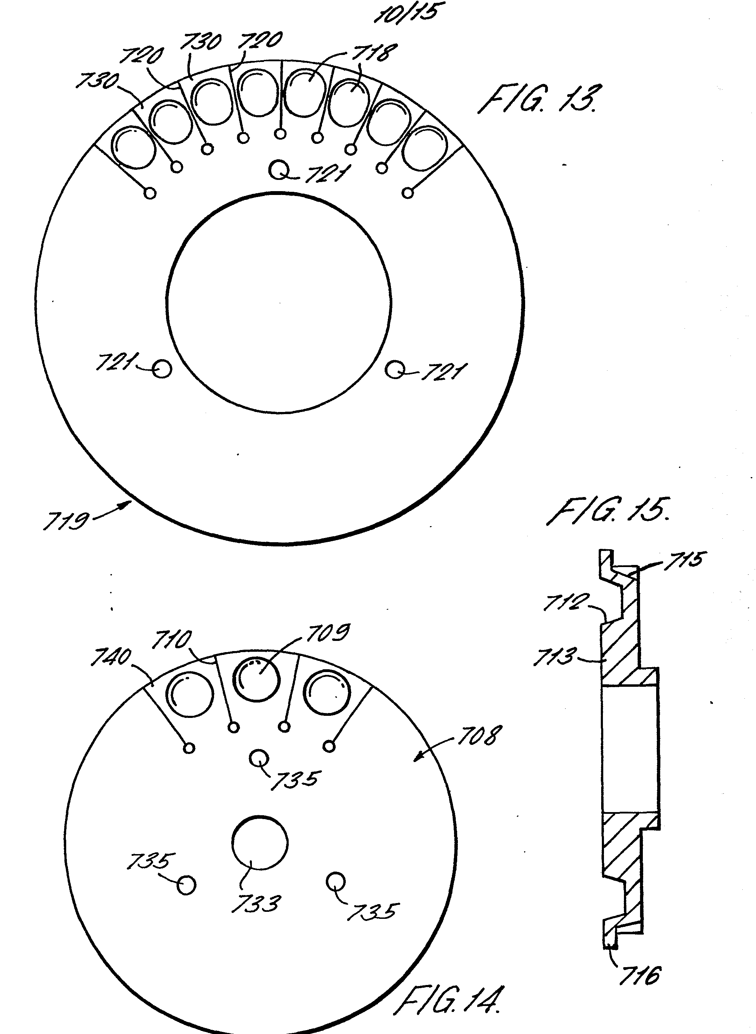

In the arrangement of Figure 9, the meshing elements 505 move into and out of engagement with the wheel 503, as the wheel gyrates, under the guidance of balls 506 in recesses 507 in the axially facing faces of the meshing elements. Looking in the axial direction, as shown in Figure 10, each meshing element has one or possibly two recesses 507 on each face, the recesses being in the form of closed profiles seen in the elevation view of Figure 10 around which the balls 506 can roll.
These profiles are shaped as described in the aforementioned applications to permit of rolling engagement
between the balls and the profiles.   The depth of the
profiles is slightly less than half the diameter of the
balls so that the profiles hold approximately one hemisphere of each ball.   The other hemisphere of each ball
is retained in a profile 509 on a capturing plate 510.
In the particular arrangement illustrated in Figure 9,
there are two such capturing plates 510, one on each
side of the wheel 503, these two capturing plates being
similar.   The recesses 509 again are closed loop
profiles holding the ball in captive dependency but
permitting the required rolling motion between the ball
and the profile.

It will be seen that the balls 506 are each captured
in a profile 507 on the element 505 and a profile 509
on the capturing plate.   Each ball thus always remains
engaged with the same profiles.   The gyrating motion of
the wheel 503 causes the wheel, in part of the cycle, as
shown at the top of Figure 9, to be in engagement with
the teeth of the element 505 and, in this position,
the balls engage the radially inward portions of the
recesses 507 and the radially outward portions of the
recesses 506 and roll around the profiles.   In the disengaged portion of the cycle, not illustrated, the meshing elements 505 are held out of engagement with the wheel and it is thus possible for elements 505 to precess with respect to the wheel. The arrangement illustrated however has the capturing plates 510 as stator plates and thus the elements 505 will gyrate but will not rotate. The output is taken from the wheel 503 via a planocentric coupling which may be of known form.

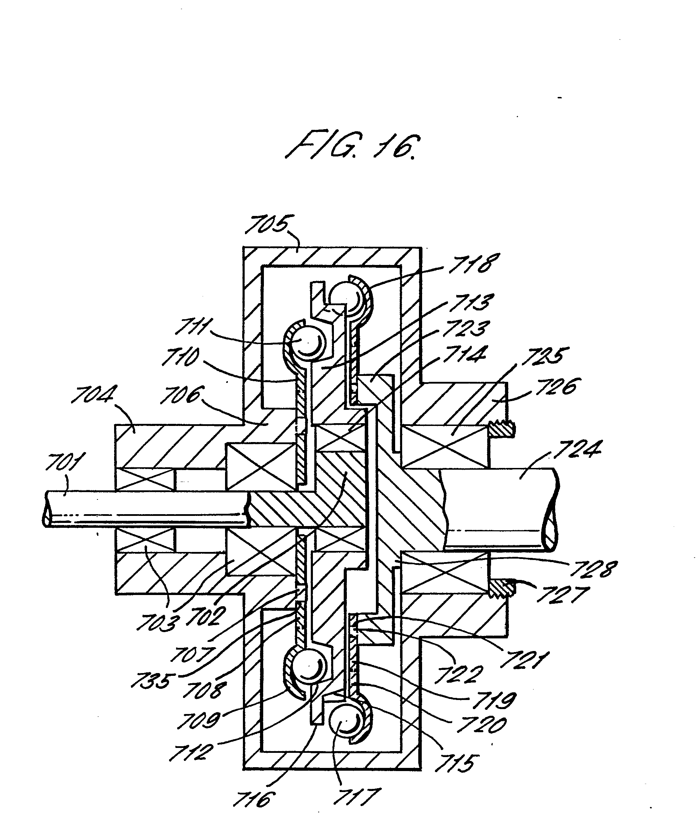

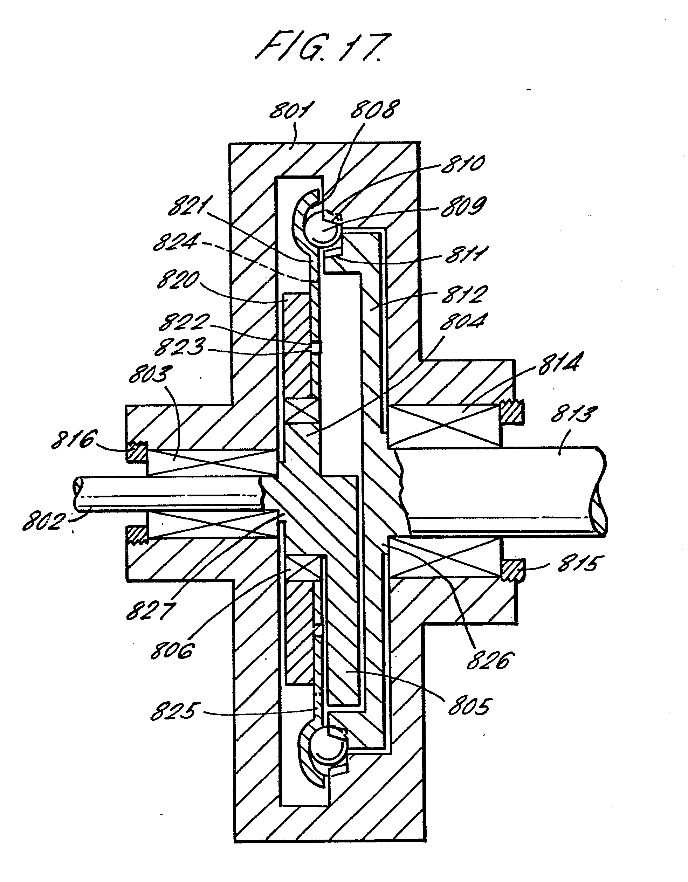

Referring first to Figures 11 and 12 there are illustrated a capturing plate 610 and gearwheel 620 which form part of a motion transmitting device such as is illustrated in Figure 1 above and described with reference to that drawing. The capturing plate 610 is the equivalent of capturing plate 105 in Figure 1 and gearwheel or sprocket 620 is the equivalent of gearwheel 108.

The capturing plate 610 extends radially outwardly from an output shaft of the device to rotate therewith. The radially outward portion of plate 610 has a thickened portion 611 in which are formed a plurality of concave recessed capturing profiles 612.

-38-

Gearwheel 620 includes a plurality of part spherical coupling recesses 621 which, in use, lie facing and adjacent to the recesses 612 in capturing plate 610. In use, the gearwheel 620 gyrates but does not rotate, rotation being prevented by a coupling formed by balls located in recesses formed in the face of the gearwheel not shown in Figure 12 and in corresponding recesses formed in a housing of the motion transmitting device.

The assembly of the housing, gearwheel and capturing plate is as in previous embodiments described and the whole assembly is axially loaded by adjustment of a taper roller bearing on the output shaft, the adjustment being effected by an axial adjustment nut.

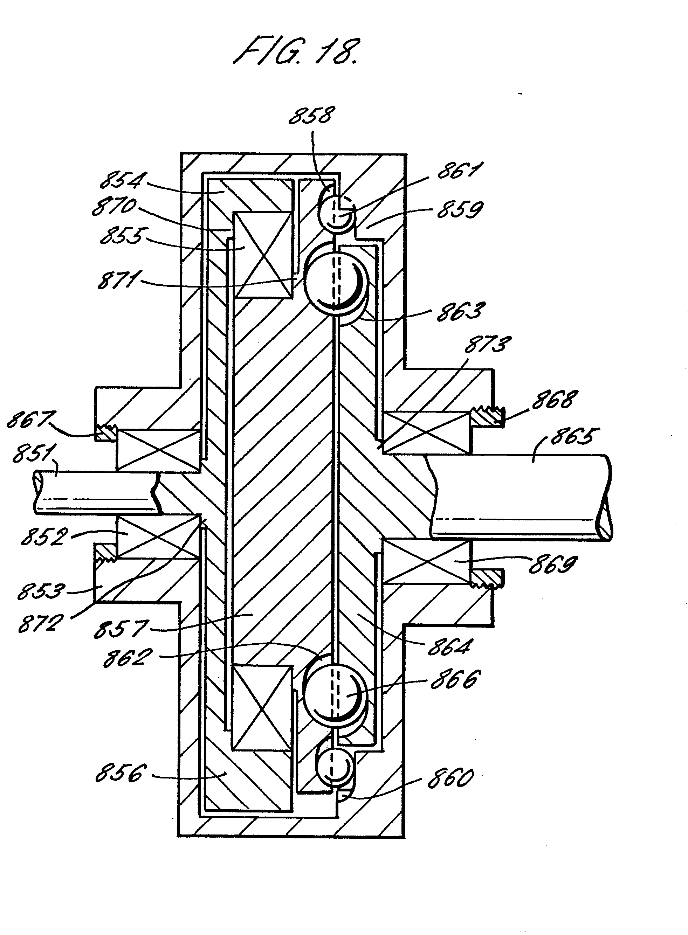

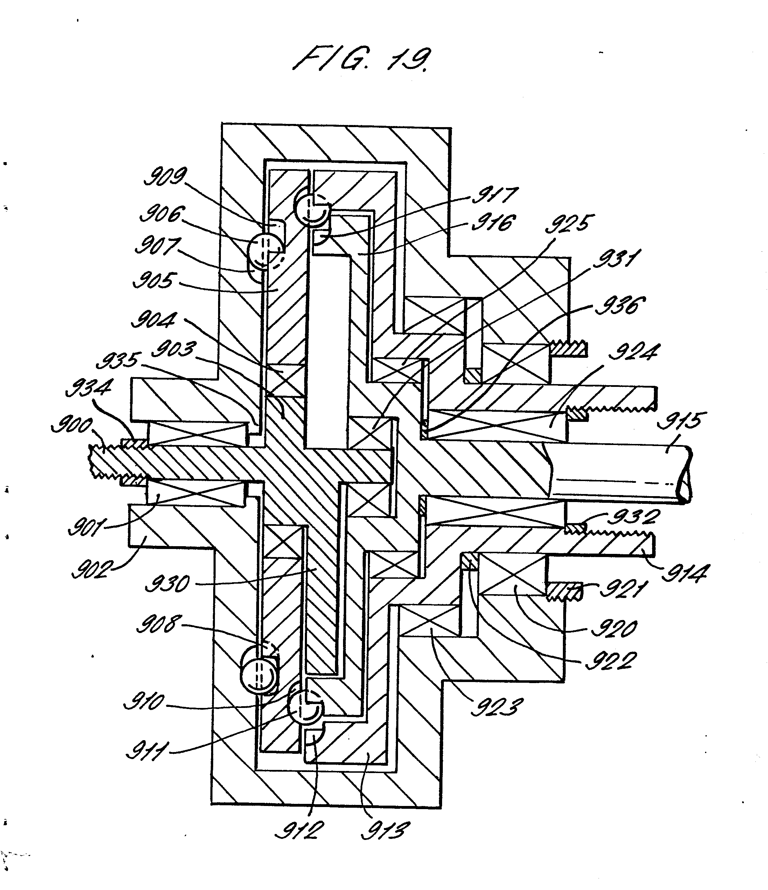

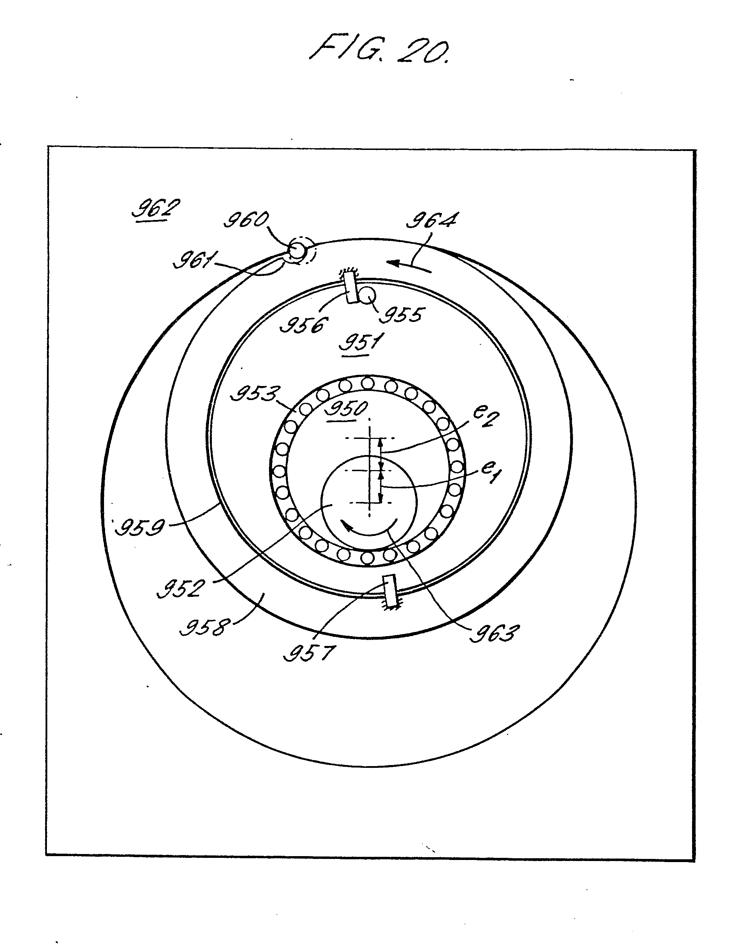

It will be appreciated that even after axial loading of the assembly, the tolerances and clearances between the various parts of the assembly will still cause some backlash in the device. An embodiment of the device which very largely eliminates this backlash is illustrated in Figure 16 and some components of the device are illustrated in Figures 13 to 15. Referring first to Figure 13, there is illustrated a capturing plate 719 which is equivalent to and replaces the capturing plate of the earlier embodiments. Capturing plate 719 is an annular plate manufactured from spring steel or other like suitable material which is resilient. Adjacent the inner edge of the annular plate 719 there are formed three location holes 721 equally spaced around the plate. The radially outward portion of the plate 719 is divided into a plurality of resilient peripheral portions 30 by radial slots 720. A circular or ovoidal scallop or recess 718 is formed in each of the portions 730. It will be appreciated that the peripheral portions 730 defined by the fine radial slots 720 are each independently resiliently movable and are like resilient petals. For this reason, the plate 719 will also be referred to as a petal wheel.

Referring now to Figure 14 there is illustrated a similar petal wheel 708 which forms a stator plate of the device illustrated in Figure 16. The petal wheel 708 is generally circular with a central hole 733 through which the input shaft passes, in use, and three equally spaced location holes 735. The radially outward portion of plate 708 is divided into a plurality of resilient peripheral portions 740 by fine radial slots 710. Each portion or petal 740 has formed therein a circular scallop or recess 709.

The spring steel petal wheels 708, 719 should preferably be formed so that their petals 740, 730, in the relaxed state, are inclined axially towards the balls 711, 717 that they hold in captive dependency, so that when the petals are under axial load, they are then stressed axially. As viewed in Figures 13 and 14, this means that the petals 730, 740 will be inclined upwardly relative to the plane of those drawings.

Figure 15 illustrates a sprocket or gearwheel 713 of the device which is preferably manufactured by die-casting or sintering. The gear wheel 713 includes, on one face scallops or recesses 712 which are generally circular in a radial sense but are inwardly tapered so that they are frusto-conical in an axial sense. The recesses 712 may also be bell shaped or broadly ellipsoidal. On its opposite face, the gear wheel 713 includes scallops or recesses 715 which form the teeth of the gear wheel and are part ovoidal or part circular in the radial sense. Again, the recesses 715 are tapered in the axial sense.

A motion transmitting device incorporating the gear wheel 713 and petal wheels 719 and 708 is illustrated in Figure 16. Referring now to Figure 16, an input shaft 701 has an eccentric 702 fixedly attached thereto. Input shaft 701 is bearingly supported in roller bearings 703 located in a cylindrical input housing portion 704 of a generally cylindrical housing 705 of the device. The gear wheel 713 is freely rotatably mounted on eccentric 702 by roller bearing 714. Gear wheel 713 can float axially on bearing 714.

The inwardly facing end of input housing 704 includes a raised annulus 706 the inner end of which has machined into it three circular location studs 707. The studs 707 are equally spaced around the raised annulus 706 and have located thereon the stator petal wheel 708, location holes 7.35 on petal wheel 708 locating on studs 707.

Balls 711 are located in the circular scallops 709 formed in petal wheel 708 and in the recesses 712 formed in gear wheel 713. The balls 711 thus form a coupling between the stator plate 708 and the gear wheel 713 which allows the gear wheel to gyrate but not to rotate as the input shaft 701 and eccentric 702 are rotated.

Axially aligned with input shaft 701 is an output shaft 724 of the device which is bearingly supported in taper roller bearing 725 which is in turn located in output housing portion 726 of the housing 705. An annular plate 723 fixedly attached to output shaft 724

0107485

-43-

includes three inwardly facing location studs 722 equally spaced around the plate 723. Capturing plate 719 is fixed to the output shaft 724 by the engagement of location holes 721 with location studs 722.

The axially tapered part circular or part ovoidal recesses 715 formed in gear wheel 713 run radially outward to a radial face 716 of gear wheel 713. Balls 717 are located between the recesses 715 and the recesses 718 formed in capturing plate 719. The number of recesses 715 formed on gear wheel 713 differs from the number of recesses 718 formed in capturing plate 719 so that as the input shaft 701 rotates to gyrate the gear wheel 713, the balls 717 precess relative to the gear wheel. As illustrated in Figure 16, with the eccentric 702 in the position shown in that figure, the balls 717 at the upper part of the gear wheel are in captive dependency in recesses 718 and in engagement with recesses 715 while the balls at the lower part of the gear wheel are held in captive dependency between the recesses 718 and the radial face 716 of the gear wheel 713.

Taper roller bearing 725 is axially adjustable to load the elements of the device by virtue of axial adjustment nut 727 which is threadedly received in the open end of output housing 7.26 and bears against one end of taper roller bearing 725. The other end of the taper roller bearing bears against a shoulder 728 formed on output shaft 7.24.

In operation, it will be appreciated that when the axial adjustment nut 7.27 is screwed inwardly, a predetermined axial load can be imposed on the stator or petal wheel 708, the two faces of the gear wheel 7.13, the capturing plate wheel 7.19 and the two sets of balls located between those parts. By virtue of the fact that the petals of the wheels 708, 7.19 are resilient, each of those petals may deflect axially as the device is axially loaded by the adjustment nut 7.27. Each petal can deflect axially by an amount totally independent of all other petals and each ball 711, 7.18 will therefore be independently located in the axial direction. The resilience of the petals and the resilient urging of the recesses 7.09, 718 produced thereby takes care of the axial variations tolerances of the elements of the device.

As the balls 711, 718 are resiliently urged into the tapered recesses 712, 715, the balls will tend to be centred in those recesses by virtue of the tapering. This takes care of all radial variations in tolerances of the parts of the device.

Thus, both the radial and axial tolerances are individually and independently compensated for as described above and backlash in the device is reduced to a minimum. Furthermore, as the balls 717 precess from one recess 715 to the next and the tolerances therefore vary there is automatic independent compensation by virtue of the fact that each ball 717 is held in captive dependency in a recess 718 which is independently resiliently urged towards a gear wheel 7.13.

The axial pre-loading imposed by the adjustment nut 7.27 may typically be approximately double the torque capacity of the device. In the example mentioned above where the motion transmitting device has a capacity of 20 inch ounces, an axial load on the assembly of approximately 40 ounces will typically be imposed. The axial load is selected to be large enough to ensure that the driving torque transmitted through the device cannot overcome the anti-backlash spring loading of the petal wheels.

It will further be appreciated that while backlash in the device described above is reduced to a minimum, the previously described advantages of multi-tooth engagement and pure rolling motion of the balls in the device, which are described above, are still retained.

Further details of the operation of the device described above with reference to Figure 16 will be more readily understood by a comparison of Figure 16 with Figure 1 and the description of Figure 1.

Referring now to Figure 17 there is illustrated a second embodiment of the invention. Again, many details of this embodiment and its method of operation will be appreciated by a comparison of Figure 17 with Figure 4 and by reading the description of that Figure.

In Figure 17, a housing 801 rotatably carries an input shaft 802 in a tapered roller input bearing 803. Fixedly attached to the input shaft 802 are an eccentric 804 and a counter balance weight 805. Eccentric 804 carries eccentric thrust bearing 806 on which is freely rotatably mounted an annular plate member 820. A petal wheel 821 is fixed to plate member 820 by engagement of location holes 822 formed in petal wheel 821 with location studs 823 extending axially from plate member 820. On one-face of petal wheel 821 are a first set of concave recessed profiles 808 in which balls 809 are held in captive dependency each profile 808 being formed in a petal 825 separated from its neighbours by radial slot 824. Balls 809 engage with second concave

recessed profiles 810 on an inwardly facing surface of the housing 801 and also with; third concave recess profiles 811 on a face of an output wheel 812. These profiles 811 form, in effect, teeth on the output wheel which is fixedly attached to an output shaft 813. The output shaft is mounted in a tapered roller bearing 814 in the housing 801.

The bearing 814 is located between a shoulder 826 on the output shaft and an axial adjustment nut 815 so that the axial position of the bearing 814 may be adjusted by axial adjustment nut 815 which is threaded into the open end of housing 801. Similarly, the axial position of input bearing 803 is adjustable by nut 816, the bearing 803 being located between nut 816 and a shoulder 827 on the input shaft.

It will be observed that the device of Figure 17 uses a common capturing plate for the two stages of the device. As illustrated in Figure 17, the balls, in the engaged portion of the first stage of the device, engage the housing 801 and the petal wheel

0107485

-49-

821 but, in the part of the cycle of the first stage where they are disengaged from the housing, can be used to engage the output wheel 812 as well as the petal wheel 821. The relative numbers of recesses 808, 810 and 811 and the operation of the device illustrated in Figure 17 is described in more detail with reference to Figure 4 above.

The petal wheel 821 illustrated in Figure 17 is similar to the petal wheels illustrated in Figures 13 and 14 Each recess 808 is located in a peripheral segment or petal 825 of the petal wheel which is independently resilient and separated from adjacent petals by radial slots 824. Furthermore, the recesses 810 and 811 in the axial direction are tapered in a similar manner to the recesses 712, 715 described with reference to Figure 15. Thus, the axial loading

-50-

on the balls 809 imposed by adjustment of nuts 815, 816 ensures that the recesses 808 are individually and independently resiliently urged.towards recesses 810, 811 to take up radial and axial tolerances as described above with reference to Figure 16.

Although only two embodiments of the invention have been described with reference to Figures 16 and 17 it will be appreciated that the use of resilient elements may equally be applied to other embodiments of motion transmitting device described and illustrated in Figures 1 to 10 above. In such other cases, where balls are trapped between two recesses, one recess is replaced by a recess formed on a petal of a petal wheel as described above and the other recess is tapered in the axial direction also as described above.

It will be appreciated that, although the embodiments described above include petal wheels which having the closed profile recesses, the petal wheels and tapered recesses could be reversed.

However, whilst the closed profile recesses or the open profile recesses can be on the petal wheels, it is preferably to have the closed profile recesses on the petal wheel. The

-51-

reason for this is that if the balls had to precess around the petal wheel they would have to pass over the radial slots and in addition, since neighbouring petals may be deflected axially by differing amounts, the balls would have to precess along an uneven surface.

Whilst the recesses described above are axially closed and this is the preferred embodiment, the recesses may be axially open (in the form of shaped holes). This may be desirable in certain circumstances to allow for the egress of foreign matter.

It will be noted that, in all the constructions described above, balls are used as the connector elements. This use of balls avoids the inherent disadvantages of roller pins, such as have been employed in the arrangements described in the prior specifications. In a roller pin, if a load is applied to the pin in a radial direction at one point along the length of the pin, the pin has to be supported at two further points to prevent the pin from tilting except in the coplanar configuration; when a coplanar configuration is used with roller pins, then a significant portion of the arc of engagement has to be discarded. With balls however a ball engaging two separate elements is inherently supported in a position where it cannot tilt. The use of balls thus overcomes the problems of roller pins requiring spaced supports in one of the elements engaged by the pin. It will be immediately apparent that, because of this, the use of balls in place of roller pins leads to the further advantageous construction described above. Moreover the balls, in all the arrangements described, support axial loads as well as providing the necessary guidance for relative motion in the radial direction. This therefore considerably simplifies the requirements for the bearings for the rotating elements, in particular the input and output shafts of the coupling. A further advantage in using balls is that a much larger fraction of the pitch of the gear can be apportioned to the recess and therefore a significantly larger diameter ball can be used than the diameter of a roller pin in a similar pitched gear.

In all the arrangements described above, the drive is reversible; in other words the input can be used as the output and the output as the input to give a speed step-up ratio if so desired. Much more generally, it has to be noted that, although, in the embodiments described, an input shaft drives an eccentric, an output shaft is driven by the wheel or wheels and there is a capturing plate which has been referred to as a stator. It is possible however to use any one of the three elements, namely the eccentric, the wheel or the capturing plate as the input and to use any other one of these three elements as the output. The third element would commonly be fixed, e.g. as a stator or housing but might be used as a second input.

A further embodiment of the invention is shown in Figure 18 which shows a single stage motion transmitting device with a back to centre coupling. In this construction, two sets of recesses are both on the same face of a rotating and gyrating capturing plate. In this way an eccentric thrust-bearing of almost the diameter of the capturing plate may be incorporated into the other face of the capturing plate thus ensuring that the capacity of this eccentric bearing will be large enough to take the full load capacity of the drive system having a plurality of balls in simultaneously transmitting loads. This is not possible with a roller pin quadrant drive since both faces of the gyrating element have to be employed.

The balls of the coupling and the quadrant drive in the device of Figure 18 again perform a second function of being thrust bearings preventing the gyrating element from tilting.

The device of Figure 18 has an input shaft 851 bearingly supported by taper roller thrust bearings 852 in a housing 853. An input flange 854 houses an eccentric taper roller thrust bearing 855 eccentrically by its outer face and against thrust face 870. The eccentricity in this particular embodiment is shown in the drawing as upward displacement of the axis and its magnitude can be seen by considering the thicker wall 856 around the bearing 855 in the lower part of the diagram.

On the inner diameter of eccentric bearing 855 is the mounted capturing plate 857 which also rests against thrust face 871. On the face of the output end of capturing plate 857 in the radially outward area are recessed scollops 858 of the quadrant drive. A stator sprocket 859 is machined into the internal face of the housing 853 at the output end of the housing. Open scallops 860 constitute the sprocket teeth. Balls 861 form independently movable meshing elements for the quadrant drive. On the radially inward portion of the capturing plate 857 are first circular scallops 862. Second circular scallops 863 are formed on the face of output flange 864 connected to an output shaft 865. Balls 866 in scallops 862, 863 complete the coupling between the capturing plate and output flanges. Axial adjustment nuts 867, 868 are provided to take up backlash. The axial adjustment nut 867 is first used to correctly preload the capturing plate 857 against the sprocket 859 through the balls 861 via thrust faces 872, 870 and 871. Then the axial adjustment nut 868 is used to correctly preload the output flange 864 against the capturing plate 857 through the balls 866 and through a taper roller thrust bearing 869 which supports the output shaft 865 in the housing 853 via thrust shoulder 873.

An advantage to configuration of Figure 18 is that it lends itself easily for the eccentric to be placed on the outside of the eccentric bearing instead of on the inside. Thus the eccentric can be used to counterbalance the gyrating capturing plate, thus eliminating the need for balance weights.

The device of Figure 18 has been described using axial adjustment nuts to take-up backlash. It will be readily apparent however that resilient means may be used, as has been described with reference to Figures 11 to 17.

It may be desired, instead of using a back-to-centre coupling stage with a unity speed ratio, to use a second stage which employs balls, in the manner previously described, to effect a further ratio change. This concept can be extended to provide two alternative outputs on separate shafts. Such a device is shown in Figure 19. In this device an input shaft 900 is supported by a roller thrust bearing 901 in a housing 902 constituting a stator. Shaft 900 carries or is integral with

an eccentric 903 around which is a roller bearing 904 carrying a first stage gyrating gear 905. In this particular embodiment 21 balls 906 are located in 21 scallops 907 in the stator 902. There are 20 teeth 908 formed by scallops in an annular groove 909 in the gear 905. This gives a first stage ratio of 20 to 1. On the opposite face of the gear 905 there are 30 recesses or scallops 910 which capture 30 balls 911. These balls 911 also engage 31 teeth constituted by recesses 912 in an output element 913 carried by an outer shaft 914 of two co-axial output shafts 914, 915. It will be seen that this second stage gives a 30 to 1 ratio and, since the two ratios subtract, the overall speed ratio between shaft 900 and shaft 914 is

$$\frac{21 \times 30 - 20 \times 31}{20 \times 31} = \frac{1}{62}$$

The second stage balls 911 also mesh, on the opposite semicircle, with a male gear 916 having 29 teeth constituted by recesses 917. This male gear is carried by output shaft 915. In this case the second stage ratio is $\frac{1}{29}$ and the two ratios add so that the overall ratio from shaft 900 to shaft 915 is $\frac{21 \times 30 - 20 \times 29}{20 \times 29} = \frac{1}{11.6}$. It should be noted that this output is in the opposite direction to that of shaft 914 for a given input direction.

The shaft 914 is supported in housing 902 by a taper roller thrust bearing 920 which can be tightened by an adjusting nut 921 against a thrust washer 922 bearing a member 913, which is supported further by roller bearing 923. The inner output shaft 915 is supported within shaft 914 by taper roller bearing 924 and within member 913 by roller bearing 925. The input shaft 900 extends through eccentric 903 and carries a counterbalance weight 930 and, at its inner end, is supported in gear 916 by roller bearing 931. An adjusting nut 932 is threaded on the inside of shaft 914 and tightens bearing 924 against gear 916 through thrust washer 936. An axial adjustment nut 934 threaded on the input shaft 900 presses the bearing 901 against a shoulder 935 on the housing 902.

It will be seen that the device of Figure 19, for a uni-directional input, provides two outputs in opposite directions at different speeds. This finds particular application for winches where it may be required, for example, to have a fast pay-out but a slower (hence with greater torque) draw-in. The cable drum of the winch may thus be connected by a simple double-throw clutch to one or other of the output shafts 914, 915 as required.

It will be noted that in the device of Figure 19, the balls 911 are used twice to drive two separate output shafts at different speeds.

In the construction illustrated, the lower speed and hence higher torque output is on the inner shaft 915 which may readily be made of sufficient cross-section to transmit this torque. The higher speed, and hence lower torque, output is on outer shaft 914 which may thus be of smaller cross-sectional area than the inner shaft 915.

It is sometimes desired to have low speed ratios. These may readily be obtained by using a two-tooth differential in each stage of a two-stage device. Consider the example of Figure 4 above modified to have a two-tooth differential in each stage. If the stator sprocket had 17 teeth, the gyrating capturing plate had 15 ball stations and the rotating output sprocket 13 teeth, then the overall ratio is $\dfrac{17 \times 15 - 15 \times 13}{17 \times 13} = \dfrac{1}{3.25}$ .

In certain applications of motion transmitting devices, particularly for light industrial purposes, it is desirable for a speed reducer to overrun if the drive shaft ceases to rotate or is reversed. This is because of the momentum in the driven system. Normally a free-wheel clutch would be provided to deal with inertia problems. In the device of the present invention using balls in recesses to transmit torque, and employed in a unidirectional drive, it is readily possible to provide for such overrun without using a separate free-wheel clutch. One such arrangement is illustrated in Figure 20. In place of the eccentric, two coaxial eccentrics 950, 951 are employed. The eccentric 950 is carried on input shaft 952 and has eccentricity $e_1$. This eccentric 950, by means of roller bearing 953 carries the second eccentric 951 which has eccentricity $e_2$. Most conveniently $e_1$ is made equal to e2. The second eccentric 951 carries a driving element, e.g. a pin 955, which engages one or other of two abutments 956, 957 on the eccentric rotating element 958 which is carried on eccentric 951 by plain bearing 959. The element 958 is shown diagrammatically

0107485

-61-

with a ball 960, which is one of a set of balls, as previously described, engaging in but precessing with respect to recess 961 in the wheel and engaging also with recesses in a capturing plate or stator, indicated at 962.

When driving, as shown in Figure 20, the input torque, in the direction shown by arrow 963, causes stop 956 to press against pin 955. The effective eccentricity is $e_1 + e_2$. The device thus operates in the manner previously described. If the rotation of input shaft 952 ceases, the output, due to the inertia of the drive system, will continue and the sprocket will move, as indicated by arrow 964, until stop 957 reaches pin 955. The two stops are conveniently 180° apart. It will be seen that, if the angular spacing of the stops is 180°, the eccentricity is now $e_1 - e_2$ and, if $e_1 = e_2$, then the eccentricity is zero. With the eccentricity removed, the device no longer couples the output to the input and, in effect, provides an automatic free-wheel clutch freely permitting overrun.

0107485

-62-

CLAIMS:

1. A motion transmitting device comprising eccentric means carrying wheel means for gyratory motion relative to a datum member, and connector means comprising a plurality of balls, each ball being in rolling orbital engagement with a recess in said datum member and in rolling orbital engagement with a recess in said wheel means, being in captive dependency in one of these recesses and being movable into and out of rolling driving engagement with the other, the number of recesses on said datum member and the wheel means differing so that the balls precess relative to said recesses in which they are not captive as the wheel means gyrates and rotates relative to said datum member.

2. A motion transmitting device as claimed in claim 1 wherein one of the three members namely the eccentric, the wheel means and the datum member is driven from an input and wherein any other one of the three members drives an output.

3. A motion transmitting device as claimed in claim 2 wherein the third of said three members is a stator.

4. A motion transmitting device as claimed in any of claims 1, 2 or 3 wherein the datum member comprises a plate having a face adjacent a face of the wheel means and wherein said recesses are in adjacent facing surfaces of said plate and said wheel means, one set of recesses being closed profiles to retain the balls in captive dependency and the other set of recesses being formed with a circumferential thrust face which provides a path to allow the precession of balls from one recess to the next as the wheel means gyrate with respect to the datum member.

5. A motion transmitting device as claimed in claim 4 wherein said datum member is rotatable and is connected to a rotatable output which is coaxial with an input driving said eccentric means, and wherein said wheel means has a second face with first coupling recesses adjacent a face of a stator element having second coupling recesses and wherein second balls are in captive dependency in said first and second coupling recesses, each of said second balls being partly in a first and partly in a second coupling recess, said coupling recesses being shaped so that the balls gyrate in the coupling recesses causing said wheel means to gyrate but not rotate and causing said rotatable datum member to rotate and to drive said output at a reduced speed compared with the speed of the input.

6. A motion transmitting device as claimed in claim 5 wherein said output has an axially adjustable axial thrust bearing for axially loading said first and second balls whereby the balls function also as a ball thrust bearing.

7. A motion transmitting device as claimed in claim 4 wherein said eccentric is on a rotatable input and wherein said datum means is arranged as a stator and wherein the wheel means is a capturing member with closed profiles having said balls in captive dependency in said closed profiles, said balls first engaging a first arc of first open recess profiles on said stator, said first open recess profiles having mouths facing axially and facing also radially inwardly, whereby said wheel means, with said balls and first open recess profiles form a first stage speed change, said balls furthermore engaging a second arc of second open recess profiles on a rotatable output member coaxial with the input, said output member having a face adjacent a facing surface of the wheel means, said second open recess profiles having mouths facing axially and facing also radially outwardly, to form a second stage speed change whereby the resultant speed change from input to output is dependent on the fractional speed changes of both the first and second stages.


8. A motion transmitting device as claimed in claim 7 and having an axial thrust bearing for said input, an axial thrust bearing on said eccentric and an axial thrust bearing for said output and wherein the axial thrust bearings for the input and output are axially adjustable for axially loading said balls whereby the balls act as thrust bearings.


9. A motion transmitting device comprising an input carrying eccentric means, wheel means carried on said eccentric means for gyratory motion relative to a datum member, and connector means comprising a plurality of balls in respective apertures extending through said wheel means parallel to the axis thereof, each ball being in rolling engagement with a closed profile of the aperture, the balls protruding out of the aperture on both faces of said wheel means and each ball being in captive dependency in its aperture, said balls being movable with said gyratory motion into and out of rolling driving engagement with first open recesses disposed on a face of said datum member adjacent said wheel means, the mouths of said first open recesses facing axially and facing radially inwardly, the number of said first recesses on said datum member and closed profiles on said wheel means differing so that the balls precess relative to said first open recesses, engaging said recesses along a first arc as the wheel means gyrates and rotates relative to said datum member thereby forming a first stage speed change, said balls further being movable into and out of rolling driving engagement with second open recesses on a face of an output member adjacent said wheel means, which second open recesses have mouths facing axially and facing radially outwardly, said output member being mounted for rotation coaxially with said input, the number of second open recesses on said output differing from the number of said closed profiles on said wheel means so that the balls precess relative to said second recesses in the opposite direction to the first stage but now relative to said output member as the wheel means rotates and gyrates relative to said output member, the balls, wheel means and output member thereby forming a second stage speed change and the overall speed change from the input to the output being dependent on both the fractions representing the speed ratios of the separate first and second stages.

10. A motion transmitting device as claimed in claim 9 and having an axial thrust bearing on said output which thrust bearing is axially adjustable for axially loading said balls thereby causing them to act as balls in a ball thrust bearing.

11. A motion transmitting device as claimed in claim 1 wherein the member having the balls in captive dependency has a plurality of apertures extending parallel to the axis through said member from one face to an opposite face and wherein the balls are in captive dependency in these apertures and wherein the other member is a double member having faces adjacent each of said faces of the member carrying the balls in captive dependency, each of these faces of said double member having open recesses to partially receive said balls protruding from said aperture thereby equalising the axial loads on said balls when in driving engagement.

12. A motion transmitting device as claimed in claim 11 wherein said double member is formed of two parts carrying respectively the two faces, the two parts being axially adjustable relative to one another whereby the balls may be axially preloaded to adjust the backlash.

13. A motion transmitting device as claimed in claim 12 wherein the two parts of said double member are separately axially adjustable with respect to said wheel means.

14. A motion transmitting device as claimed in claim 11 wherein each part of said double member is separate and is independently movable, each part being mounted on a separate eccentric disposed radially at 180.° to one another.

15. A motion transmitting device as claimed in any of the preceding claims wherein the member or each member having open recesses into and out of which balls are movable also has a circumferential thrust face radially inwardly or radially outwardly of the open recesses to contain said balls radially and axially when the balls are disengaged from the recesses.

16.  A motion transmitting device as claimed in claim 2 wherein said eccentric is fixed on a first shaft and said datum member is fixed on a coaxial second shaft, one of said shafts being an input shaft and the other an output shaft, and wherein a second set of balls forming a planocentric coupling is provided, the balls of the second set being in captive dependency both in recesses in a second face of the wheel means and in recesses in a stator plate adjacent said second face of the wheel means.

17.  A motion transmitting device as claimed in claim 1 wherein the datum member is a cylindrical member extending around the wheel means with said capturing recesses on the inner cylindrical surface of the datum member.

18.  A motion transmitting device as claimed in claim 17 wherein the open recesses extend both radially inwardly from the periphery of the wheel means and axially inwardly from a face of the wheel means with the bases of the recesses forming radially extending teeth which constrain axial movement of the balls in one direction and the recesses furthermore being interconnected with a circumferential thrust face for precession of the balls relative to the wheel means around the outer ends of said teeth.

19. A motion transmitting device as claimed in claim 2 wherein a stator is provided adjacent the opposite face of the wheel means with further balls in recesses in said stator and said opposite face arranged to permit gyratory movement but to prevent rotation of the wheel means.

20. A motion transmitting device as claimed in claim 19 and having an input shaft and an output shaft which are coaxial, one of which is secured to said eccentric and the other to said datum member.

21. A motion transmitting device as claimed in claim 1 wherein the wheel means constitutes a capturing plate with recesses each associated with one ball and wherein said datum plate is rotatably mounted and wherein a stator is arranged around said wheel means with recesses arranged for engagement by said balls to permit gyratory movement with the balls precessing

-71-

in said stator and also precessing with respect to the datum plate.

22. A motion transmitting device as claimed in claim 21 wherein the number of recesses in the stator is greater than the number of recesses in the wheel and wherein the number of recesses in the datum member is less than the number of recesses in the wheel.

23. A motion transmitting device as claimed in claim 22 wherein the recesses are uniformly spaced around the stator, around the wheel and around the datum member, and wherein the number of recesses in the stator is one more than the number in the wheel and wherein the number of recesses in the datum member is one less than the number in the wheel.

24. A motion transmitting device as claimed in claim 1 wherein the wheel means constitutes a capturing plate with its recesses in the form of holes through the wheel means, the balls being of such size as to protrude on both faces of the wheel means and wherein a stator plate is provided adjacent one face of the wheel means and wherein said datum member is rotatably mounted with respect to the stator to lie adjacent the opposite face of the wheel means, and wherein the recesses in the stator and the recesses in the datum member are shaped to allow the balls to precess relative to the stator and to precess relative to the datum member as the wheel means gyrates and wherein the number of recesses in the stator differs from the number of recesses in the wheel means and wherein the number of recesses in the datum member differs both from the number of recesses in the stator and from the number of recesses in the wheel means.

25. A motion transmitting device as claimed in claim 24 wherein the recesses in the stator, wheel means and datum member are uniformly spaced and wherein there are $n$ recesses on the wheel means and wherein one of the stators and datum members has $n + 1$ recesses and the other $n - 1$ recesses.

26. A motion transmitting device as claimed in any of the preceding claims wherein said capturing profiles, considered in a radially extending plane, are ovoidal or part-ovoidal.

27. A motion transmitting device as claimed in any of the preceding claims wherein said open recesses, considered in a radially extending plane, are part-ovoidal profiles.

28. A motion transmitting device as claimed in any of claims 1 to 25 wherein said capturing profiles, considered in a radial plane, are circular or part-circular.

29. A motion transmitting device as claimed in any of claims 1 to 26 or claim 28 wherein said open recesses, considered in a radial plane, have part-circular profiles..

30. A motion transmitting device comprising eccentric means carrying wheel means for gyratory movement relative to a datum member, connector means comprising a plurality of balls, a plurality of independently movable meshing elements having meshing portions, which elements are movable into and out of engagement with complementary-shaped meshing portions on said wheel means, each ball being in captive rolling engagement with a recess in said datum member and also in captive rolling engagement in a recess in a meshing element, the recesses being shaped so that the meshing elements move into and out of engagement with the wheel means as the eccentric rotates, the meshing portions on the meshing elements and the meshing portions on the wheel means being arranged so that the meshing elements precess relative to the wheel means.

31.  A motion transmitting device as claimed in claim 30 having said recesses in a side face of each meshing element and in an adjacent radially extending surface of said datum member.

32.  A motion transmitting device as claimed in claim 31 and having recesses in two opposite faces of each meshing element and in respective adjacent surfaces of said datum member.

33.  A motion transmitting device as claimed in any of claims 1 to 5 wherein one of the recesses is independently resiliently urged axially towards the other.

34.  A motion transmitting device as claimed in any of claims 1 to 5 wherein all the recesses in said datum member are urged towards co-operating recesses in said wheel means.

35. A motion transmitting device as claimed in any of claims 1 to 5 wherein all the recesses in said wheel means are urged towards co-operating recesses in said datum member.

36. A motion transmitting device as claimed in any one of claims 1 to 32 in which one set of each of said pairs of sets of recesses or profiles between which balls are located are independently axially resiliently urged towards the other set of recesses or profiles.

37. A motion transmitting device as claimed in claim 36 in which said one set of recesses is formed in plate means comprising a plurality of resilient peripheral segments, one said recess being formed in each peripheral segment.

38. A motion transmitting device as claimed in claim 37 in which said plate means comprises a spring steel plate having radial slots separating the peripheral segments.

39. A motion transmitting device as claimed in any one of claims 36 to 38 in which the other of said sets of recesses or profiles is each tapered in an axial direction.

40. A motion transmitting device comprising eccentric means carrying wheel means for gyratory motion relative to a datum member, and connector means comprising a plurality of balls, each ball being in rolling engagement with a recess in said datum member and a recess in said wheel means, being in captive dependency in one of these recesses and being movable into and out of rolling driving engagement with the other, and one of the recesses being independently resiliently urged axially towards the other, the number of recesses on said datum member and the wheel means differing so that the balls precess relative to said recesses in which they are not captive as the wheel means gyrates and rotates relative to said datum member.

41. A motion transmitting device as claimed in claim 40 wherein the datum member comprises plate means having a face adjacent a face of the wheel means and wherein said recesses are in adjacent facing surfaces of said plate and said wheel means, one set of recesses being closed profiles to retain the balls in captive dependency and the other set of recesses being formed with an interconnecting thrust face for precession of balls from one recess to the next as the wheel means gyrate with respect to the datum member.

42. A motion transmitting device as claimed in claim 41 in which the plate means comprises a plurality of axially resilient peripheral segments, one recess being formed in each of said peripheral segments.

43. A motion transmitting device as claimed in claim 42 in which the closed profile recesses are formed in the plate means.

44. A motion transmitting device as claimed in any one of claims 40 to 43 in which the other set of recesses are each tapered in an axial direction from their open sides.

-78-

45. A motion transmitting device as claimed in any one of claims 41 to 44 wherein said datum member is rotatable and is connected to a rotatable output which is coaxial with an input driving said eccentric means, and wherein said wheel means has a second face with a first set of coupling recesses adjacent a face of a stator element having a second set of coupling recesses and wherein second balls are in captive dependency in said first and second sets of coupling recesses, each of said second balls being partly in a first and partly in a second coupling recess, said coupling recessess being shaped so that the balls gyrate in the coupling recesses causing said wheel means to gyrate but not rotate and causing said rotatable datum member to rotate and to drive said output at a reduced speed compared with the speed of the input, and in which each one of said coupling recesses in one of said sets is independently resiliently urged axially towards the other.

46. A motion transmitting device is claimed in claim 40 in which said second set of coupling recesses are resiliently urged axially.

47. A motion transmitting device as claimed in claim 46 in which the stator element comprises a plurality of axially resilient peripheral segments, one second coupling recess being formed in each of said peripheral segments.

48. A motion transmitting device as claimed in claim 46or claim 47 in which the first set of coupling recesses are each tapered in an axial direction.

49. A motion transmitting device as claimed in claim 45wherein said output has an axially adjustable axial thrust bearing for axially loading said first and second balls whereby the axially resiliently urged recesses are pre-stressed.

50. A motion transmitting device as claimed in claim 42 or claim 46 in which the means defining resilient peripheral segments comprise spring steel plates having radial slots separating the segments.

51. A motion transmitting device as claimed in claim 41wherein said eccentric is on a rotatable input and wherein said datum means is arranged as a stator and wherein the wheel means is a capturing member with closed profiles having said balls in captive dependency in said profiles, said balls first engaging a first arc of first open recess profiles on said stator, said first open recess profiles having mouths facing axially and facing also radially inwardly, whereby said wheel means, balls and first open recess profiles form a first stage speed change, said balls furthermore engaging a second arc of second open recess profiles on a rotatable output member co-axial with the output, said output member having a face adjacent a facing surface of the wheel means, said second open recess profiles having mouths facing axially and facing also radially outwardly, to form a second stage speed change whereby the resultant speed change from input to output is dependent on the fractional speed changes of both the first and second stages, an in which said axially resiliently urged recesses are said closed profiles in said wheel means.

52. A motion transmitting device as claimed in claim 51 in which said wheel means includes a plurality of axially resilient peripheral segments, one closed profile being formed in each segment.

53. A motion transmitting device as claimed in claim 51 or 52 in which said first and second open recess profiles are tapered in the axial direction.

54. A motion transmitting device as claimed in claim 51 and having an axial thrust bearing for said input, an axial thrust bearing on said eccentric and an axial thrust bearing for said output and wherein the axial thrust bearings for the input and output are axially adjustable for axially loading said

balls whereby the axially resiliently urged recesses are pre-stressed.


55. A motion transmitting device as claimed in any of claims 1 to 4 or 15 or 33 to 44 wherein said wheel means, on one face, has a first set of recesses, interconnected for precession of balls in a first set of balls engaging in recesses in the datum member which constitutes a capturing plate and wherein said wheel means, on said one face, has a second set of recesses capturing a second set of balls which can engage in and precess with respect to teeth constituted by interconnected recesses on an output member.


56. A motion transmitting device as claimed in claim 55 wherein an input shaft drives an eccentric element on a substantially outer diameter of a surface of the wheel means.

57. A motion transmitting device as claimned in any of claims 1 to 4 or 33 to 40 wherein said eccentric is on a rotatable input and wherein said datum means is arranged as a stator with recesses capturing a first set of balls and wherein the - wheel means has recesses interconnected for precessing of the balls of the first set, whereby the first set of balls with the stator and wheel means form a first stage and wherein the wheel means has a further set of recesses capturing balls of a second set of balls which balls engage interconnected recesses on an output member to form a second stage.

58. A motion transmitting device as claimed in claim 57 wherein the balls of said second set engage interconnected recesses of two separate output members, the numbers of recesses in the two separate output members differing so that the outputs are driven at different speeds for a given speed of input drive.

59. A motion transmitting device as claimed in claim 58 wherein one of the output members has a number of recesses for balls which is less than the number of ball stations on the wheel means for the second set of balls and wherein the other of the output members has a number of recesses for balls which is greater than the number of ball stations on the wheel means for the second set of balls.

60. A motion transmitting device as claimed in claim 59 wherein the inner output member has fewer ball recesses than the outer output member and wherein the inner output member drives a shaft of greater cross-section than the outer coaxial output shaft.

61. A motion transmitting device as claimed in any of the preceding claims and arranged for uni-directional drive wherein said eccentric means comprises two coaxial and relatively rotatable eccentrics, and wherein the input is connected to one of the eccentrics and wherein the other of the eccentrics drives the gyrating wheel means in one direction through stops which permit relative angular motion of one eccentric relative to the other eccentric, the stops being arranged so that, in the drive direction, the eccentricities are additively combined and, in the reverse direction, the eccentricities are subtracted so as to reduce the eccentricity of the wheel means substantially to zero and thereby permit overrun of the output.

FIG. 1.

FIG. 2.

FIG. 3.

FIG. 4.

FIG. 5.

FIG. 6.

0107485

6/15

FIG. 7

0107485

7/15

FIG. 8.

FIG. 9.

505

507
506
509

510

504

510

503

502

501

500

FIG. 10.

505

507
506

506

FIG. 11.

612

611

610

FIG. 12.

621

620

0107485

FIG. 13.

721

719

FIG. 15.

715

712

713

716

740  710  709

735

708

733  735  735

FIG. 14.

FIG. 16.

0107485

12/15

FIG. 17.

FIG. 18.

FIG. 19.

0107485

15/15

FIG. 20.

0107485

European Patent
Office

**EUROPEAN SEARCH REPORT**

Application number

EP 83 30 6381

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl. 3) |
| D,A | GB-A-2 092 706 (J. CRAVEN CARDEN) * Abstract; figure 1 * <br><br> --- | 30,32 | F 16 H 1/32 <br> F 16 H 25/06 |
| A | EP-A-0 037 287 (GAUNTGLEN LTD. et al.) <br><br> --- | | |
| A | EP-A-0 014 784 (F.W. KENNINGTON et al.) <br><br> --- | | |
| A | FR-A-1 021 945 (CONSTRUCTIONS MECANIUES KELLER-DORIAN) <br><br> ----- | | |
| | | | **TECHNICAL FIELDS SEARCHED (Int. Cl. 3)** |
| | | | F 16 H 1/00 <br> F 16 H 25/00 |

The present search report has been drawn up for all claims

| Place of search <br> BERLIN | Date of completion of the search <br> 15-12-1983 | Examiner <br> LEMBLE Y.A.F.M. |
|---|---|---|

EPO Form 1503 03 82